(19) Europäisches Patentamt
European Patent Office
Office européen des brevets

(11) EP 4 802 896 A1

(12) **EUROPÄISCHE PATENTANMELDUNG**

(43) Veröffentlichungstag:
**09.09.2026 Patentblatt 2026/37**

(21) Anmeldenummer: **25161225.5**

(22) Anmeldetag: **03.03.2025**

(51) Internationale Patentklassifikation (IPC):
***A01N 47/30*** *(2006.01)* ***A01N 47/36*** *(2006.01)*
***A01P 1/00*** *(2006.01)* ***A01P 3/00*** *(2006.01)*
***A01P 21/00*** *(2006.01)*

(52) Gemeinsame Patentklassifikation (CPC):
**A01N 47/36; A01N 47/30; A01P 1/00; A01P 3/00; A01P 21/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **AlzChem Trostberg GmbH**
**83308 Trostberg (DE)**

(72) Erfinder:
- **ZGELA, Dominik**
  **83376 Truchtlaching (DE)**
- **RÖMER, Malte**
  **89134 Blaustein (DE)**
- **BRANDL, Michael**
  **84549 Engelsberg (DE)**
- **MATHES, Manuel**
  **83352 Altenmarkt (DE)**
- **POPP, Stefanie**
  **83313 Siegsdorf (DE)**
- **PFAFFENBERGER, Veronika**
  **83308 Trostberg (DE)**

(54) **METHODE ZUR IMMUNSTIMULATION VON KULTURPFLANZEN**

(57) Die Erfindung betrifft die Verwendung von Harnstoffderivaten als Pflanzenabwehrregulatoren in Nachtschattengewächsen und Doldenblütler gegen bakterielle Infektionen aus der Gruppe *Pseudomonas spp., Xanthomonas spp., Ralstonia spp. und/oder einer Pilzinfektion mit Phytophthora infestans.*

EP 4 802 896 A1

## Beschreibung

Die vorliegende Erfindung beinhaltet die Verwendung von aromatischen oder heteroaromatischen Harnstoffderivaten als Pflanzenabwehrregulatoren zur Immunstimulation von Kulturpflanzen und ein Verfahren zur Minimierung der Besiedlung von Schadorganismen an Nachtschattengewächsen und Doldenblütlern.

Die naturgegebene Exposition von Kulturpflanzen gegenüber abiotischen und biotischen Stressfaktoren resultiert im Allgemeinen in Ertrags- und Qualitätsminderungen des Ernteguts. Beide Stressfaktoren können unabhängig voneinander und in Wechselwirkung auftreten, wobei letzteres Szenario überwiegt. Zu den abiotischen Stressfaktoren zählen u.a. Hitze, Trockenheit oder Frost, während zu den biotischen Stressfaktoren u.a. Viren, Pilze, Bakterien, Parasiten oder Symbionten zählen.

Biotische Stressfaktoren spielen auch bei einer Kultivierung von Nachtschattengewächsen (*Solanacea* spp.), wie beispielsweise von Tomaten (*Solanum lycopersicum*), Paprika (*Capsicum* spp.), Kartoffeln (*Solanum tuberosum*), Auberginen (*Solanum melongena*), und Tabak (*Nicotiana* spp.) eine große Rolle. Bakterien und Pilze können dabei symptomatisch Blattflecken, Blattnekrosen, Schimmel, Verfärbungen der Gefäßbündel und Blätter, Schleimexudate, Pusteln, Tumore, Rost und Welke und viele weitere Schadbilder hervorrufen, welche sowohl im Freiland als auch im geschützten Anbau beobachtet werden können.

Bedeutende Bakterienkrankheiten bei Nachtschattengewächsen werden beispielsweise verursacht durch *Pseudomonas syringae* pathovars (z.B. Bakterieller Fleck bei Tomate, Wildfeuer bei Tabak), *Clavibacter michiganensis* subsp. *michiganensis* (bakterieller Krebs), *Xanthomonas vesicatoria* (bakterieller Schorf und Blattflecken der Tomate), *Xanthomonas axonopodis* pv. *vesicatoria* (bakterielle Blattfleckenkrankheit von Paprika), *Ralstonia solanacearum* (Bakterielle Welke), *Pectobakterium* spp. (Schwarzbeinigkeit, Stängel- und Knollennassfäule) und *Dickeya spp.* (Stängelnekrosen, Bakterienwelke und Knollennassfäule), *Streptomyces spp.* (Kartoffelschorf).

Bedeutende Pilzkrankheiten bei Nachtschattengewächsen werden beispielsweise verursacht durch *Sclerotinia sclerotiorum, Corticium rolfsii, Thanatephorus cucumeris, Thielaviopsis basicola, Pyrenochaeta lycopersici* (Stängel- und Wurzelfäule), *Phytophthora capsici, Phytophthora parasitica* (Phytophthora-Wurzelfäule), *Fusarium oxysporum, Verticillium alboatrum*, *Verticillium dahliae* (Fusarium- und Verticilliumfäule), *Colletotrichum coccodes, Glomerella cingulata, Colletotrichum dematium* (Anthraknose), *Alternaria solani* (Frühfäule), *Phytophthora infestans* (Kraut- und Knollenfäule der Kartoffel, Blatt-, Stiel- und Fruchtfäule der Tomate), *Septoria lycopersici* (Blattfleck der Tomate), *Cladosporium fulvum* (Blattschimmel), *Oidium sp.* (Echter Mehltau), *Botrytis cinerea* (Grauschimmel) *Synchytrium endobioticum* (Kartoffelkrebs) *Spongospora subterranea* (Pulverschorf).

Zur Eindämmung des Befalls durch eine Vielzahl an bakteriellen oder pilzlichen Schadorgansimen bei Nachtschattengewächsen ist insbesondere die Anwendung von Kupfer bzw. Kupferverbindungen üblich. Kupfer, ein Schwermetall, ist ein hochwirksamer Stoff, welcher als Standardbakterizid und -fungizid für eine Vielzahl an Kulturpflanzen eingesetzt wird. Kupfer wirkt dabei toxisch gegenüber Schad- und Mikroorgansimen. Aufgrund dieser Toxizität ist Kupfer nicht unbedenklich. Eine Reduzierung der Verwendung von Kupfer bzw. Kupferverbindungen zur Behandlung von Kulturpflanzen ist daher wünschenswert.

Ein Ansatz, um die Anwendung kupferhaltiger Pestizide zu verringern, liegt in der Bereitstellung von pilz- und bakterienresistentem Pflanzenmaterial. Die Züchtung solchen Materials ist jedoch in der Regel mit langen Wartezeiten und entsprechend hohen Kosten verbunden. Weiterhin besteht die Gefahr, dass ein Züchtungserfolg ausbleibt bzw. Resistenzen nach wenigen Jahren wieder durchbrochen werden können. Ein weiterer möglicher Ansatz besteht in der Bemühung das pflanzengegebene Abwehrsystem zu stimulieren um einen potenziellen Befall durch Bakterien und/oder fall. Pilzen vorzubeugen bzw. zu reduzieren.

Eine Schwermetall-freie Methode zur Bekämpfung von Schadorganismen bilden Cytokinine und Cytokininähnliche Stoffe. Bei exogener Anwendung kann eine präventive Wirkung initiiert und die Widerstandskraft von Kulturpflanzen sowohl gegenüber biotischen als auch abiotischen Stressfaktoren erhöht werden.

Cytokinine sind Schlüsselregulatoren der Pflanzenverteidigung. Auf einen Pathogenbefall ist in der Regel ein Anstieg der Cytokinin-Konzentration an der Infektionsstelle feststellbar. Dies kann zu einer tiefgreifenden Umgestaltung des primären und sekundären Stoffwechsels der Pflanze führen, die mit einer Abwehrreaktion einhergeht (z.B. Giron et al., Functional Ecology, 27, 599, 2013).

In Kenntnis dessen wurden bereits Vorschläge zur Bekämpfung verschiedener Krankheitserreger verschiedener Kulturpflanzen untersucht. Zum Beispiel wird in Moskova et al., C. R. Acad. Bulg. Sci., 73, 11, 2020, 1538-1544 die Auswirkungen von N-(2-chloro-4-pyridyl)-N'-Phenylharnstoff (4PU-30) auf Tomatenpflanzen im Gewächshaus untersucht. Die Pflanzen wurden in einem frühen Stadium mit dem Wirkstoff behandelt und kurz darauf mit TSWV (Tomatenbronzefleckenvirus) infiziert.

Großkinsky et al., Plant Phys., 157, 815, 2011, beschreiben eine erhöhte Resistenz von Tabakpflanzen gegen das Pathogen *Pseudomonas syringae* pv *tabaci*, durch eine exogene Zugabe von Thidiazuron mittels Blattstielfütterung an 7 bis 10 Wochen alten Pflanzenblättern. Dabei soll die Resistenz in Tabak in erster Linie durch die Induktion von sekundären Pflanzenstoffen wie Phytoalexine vermittelt werden, welche das Erregerwachstum einschränkt.

Im Kontext der Bekämpfungsmöglichkeiten benannter Schadorganismen gilt es nun effiziente und zulassungsfähige Wirkstoffe zu finden, die die Verteidigungsmechanismen von Kulturpflanzen, insbesondere von Nachtschattengewächsen stimulieren können. Diese sollen in Kulturpflanzen eine präventive Wirkung gegenüber biotischen Stressfaktoren entfalten, und damit in der Konsequenz die Einsatzmenge nachfolgender bzw. kurativer Pflanzenschutzmaßnahmen reduzieren und im besten Fall unnötig machen. Darüber hinaus ist es wünschenswert, dass eine solche Behandlung zur Reduzierung der Gesamtbelastung des Ernteguts und der Böden mit Pflanzenschutzmitteln und deren Rückständen beiträgt. Gleichzeitig ist es wünschenswert, dass eine derartige Stimulierung sich nicht negativ auf den Ertrag und die Qualität des Ernteguts von Kulturpflanzen auswirkt.

Überraschenderweise haben Feld- und Gewächshausversuche sowie Genexpressionsanaylsen jetzt gezeigt, dass durch die Behandlung von Nachtschattengewächsen mit bestimmten aromatischen bzw. heteroaromatischen Harnstoffderivaten eine Reihe von Genen zur Abwehr von Bakterien und Pilze aktiviert und der Befall der Pflanzen mit diesen Erregern deutlich gehemmt werden kann. In Gewächshaus- und Feldversuchen konnte weiterhin belegt werden, dass infolgedessen die Anwendung von Kupfer reduziert oder sogar vollständig weggelassen werden konnte, ohne negative Auswirkungen auf den Ertrag des Erntegutes zu haben.

Gegenstand der vorliegenden Erfindung ist dementsprechend die Verwendung von Phenylharnstoffderivaten der Formel (I) als Pflanzenabwehrregulator, insbesondere zur Vorbeugung und/oder Abschwächung bakterieller Infektionen durch Erreger aus der Gruppe *Pseudomonas spp., Xanthomonas spp., Ralstonia spp. und* / oder Pilzinfektionen mit *Phytophthora infestans* von Kulturpflanzen aus der Gruppe der Nachtschattengewächse und der Doldenblütler

Formel (I)

wobei $R^1$ und $R^2$ unabhängig voneinander für einen 6- bis 10-gliedrigen mono- oder bicyclischen Arylrest oder einen 6- bis 10-gliedrigen mono- oder bicyclischen Heteroarylrest stehen, wobei die Reste unsubstituiert oder mit Alkyl- und/oder Halogenresten substituiert sein können.

Somit ist ein Gegenstand der vorliegenden Erfindung die Stimulierung der Pflanzenabwehr in Nachtschattengewächsen und Doldenblütler gegen bakterielle Infektionen aus der Gruppe *Pseudomonas spp., Xanthomonas spp., Ralstonia spp. und/oder einer Pilzinfektion mit Phytophthora infestans* durch Verbindungen der Formel (I).

Im Zusammenhang mit der vorliegenden Erfindung soll dabei unter Alkyl ein gesättigter, linearer oder verzweigter, aliphatischer Rest verstanden sein, insbesondere ein Alkylrest, der die allgemeine Formel $C_nH_{2n+1}$ aufweist, wobei n die Anzahl der Kohlenstoffatome des Restes wiedergibt und eine ganze Zahl von 1 bis 10, bevorzugt von 1 bis 5, darstellen kann, wobei die Alkylreste ganz oder teilweise halogeniert sein können. Besonders bevorzugte Alkylreste sind ausgewählt aus der Gruppe Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl 1-Ethylpropyl Fluormethyl, Difluormethyl und Trifluormethyl.

Bevorzugte Halogenreste sind Fluor, Chlor, Brom, Jod, wobei Fluor und Chlor besonders bevorzugt sind.

Gemäß der vorliegenden Erfindung bedeutet Aryl bevorzugt Phenyl oder Naphthyl, ganz besonders bevorzugt Phenyl, wobei der Phenyl oder Naphtylrest ein oder mehrfach mit Alkyl- und/oder Halogenresten substituiert sein kann. Insbesondere bevorzugt sind Arylreste ausgewählt aus der Gruppe Phenyl, 2-Chlorphenyl, 2-Fluorphenyl, 3-Chlorphenyl, 3-Fluorphenyl, 4-Chlorphenyl, 4-Fluorphenyl, 2,4-Dichlorphenyl, 2,4-Difluorphenyl, 2-Chlor-4-Fluorphenyl, 2-Fluor-4-Chlorphenyl, 2-Methylphenyl, 2-Ethylphenyl, 3-Methylphenyl, 3-Ethylphenyl, 4-Methylphenyl, 4-Ethylphenyl, 2,4-Methylphenyl, 2,4-Ethylphenyl, 2-Methyl-4-ethylphenyl, 2-Ethyl-4-methylphenyl, 2-Chlor-4-methylphenyl, 2-Methyl-4-chlorphenyl, 2-Fluor-4-methylphenyl, 2-Methyl-4-fluorphenyl, 2-Chlor-4-ethylphenyl, 2-Ethyl-4-chlorphenyl, 2-Fluor-4-ethylphenyl und 2-Ethyl-4-fluorphenyl. Ganz besonders bevorzugte Arylreste sind Phenyl, 2-Methylphenyl, 3-Methylphenyl, 4-Methylphenyl, 2-Chlorphenyl, 3-Chlorphenyl, 4-Chlorphenyl, 2-Fluorphenyl, 3-Fluorphenyl und 4-Fluorphenyl.

Gemäß der vorliegenden Erfindung steht Heteroaryl für einen 6-gliedrigen monocyclischen oder einen 9- bis 10-gliedrigen bicyclischen heteroaromatischen Rest, insbesondere einen heteroaromatischen Rest mit 3 bis 9 Kohlenstoffatomen und einem oder mehreren Heteroatomen ausgewählt aus der Gruppe Stickstoff, Sauerstoff oder Schwefel. Bevorzugt umfassen die Heteroarylreste Reste ausgewählt aus der Gruppe Pyridyl, Pyrazinyl, Pyrimidinyl, Pyridazinyl, 1,3,5-Triazinyl, Isochinonyl, Chinonyl, Chinazolinyl, Cinoxalinyl, Benzoxazinyl, Indolyl, Benzofuranyl, Benzoxazolyl, Pteridinyl und Purinyl. Bensonders bevorzgt sind monocylklische 6-gliedrige heteraromatische Reste mit einem, zwei

oder drei Stickstoffatomen, insbesondere ausgewählt aus der Gruppe Pyridyl, Pyrazinyl, Pyrimidinyl, Pyrazinyl und 1,3,5-Triazinyl, ganz besonders bevorzugt ist Pyridyl. Die Heteroarylreste können weiterhin ein oder mehrfach mit Alkyl- und/oder Halogenresten substituiert sein. Besonders bevorzugte Heteroarylreste sind ausgewählt aus der Gruppe Pyridyl, Chlorpyridyl, Fluorpyridyl, Dichlorpyridyl, Difluorpyridyl, Chlor-fluorpyridyl, Methylpyridyl und Ethylpyridyl. Insbesondere bevorzugt sind Heteroarylreste ausgewählt aus der Gruppe Pyridyl, 2-Chlor-4-pyridyl, 2-Fluor-4-pyridyl, 3-Chlor-4-pyridyl, 3-Fluor-4-pyridyl, 2-Chlor-3-pyridyl, 4-Chlor-3-pyridyl, 5-Chlor-3-pyridyl, 6-Chlor-3-pyridyl, 2-Fluor-3-pyridyl, 4-Fluor-3-pyridyl, 5-Fluor-3-pyridyl, 6-Fluor-3-pyridyl, 3-Chlor-2-pyridyl, 4-Chlor-2-pyridyl, 5-Chlor-2-pyridyl, 6-Chlor-2-pyridyl, 3-Fluor-2-pyridyl, 4-Fluor-2-pyridyl, 5-Fluor-2-pyridyl, 6-Fluor-2-pyridyl, 3-Chlor-4-pyridazinyl, 5-Chlor-4-pyridazinyl, 6-Chlor-4-pyridazinyl, 4-Chlor-3-pyridazinyl, 5-Chlor-3-pyridazonyl, 6-Chlor-3-pyridazinyl, 3-Chlor-5-pyridazinyl, 4-Chlor-5-pyridazinyl, 6-Chlor-5-pyridazinyl, 3-Chlor-6-pyridazinyl, 4-Chlor-6-pyridazinyl, 5-Chlor-6-pyridazinyl, 2-Chlor-4-pyrimdinyl, 5-Chlor-4-pyrimidinyl, 6-Chlor-4-pyrimidinyl, 4-Chlor-2-pyrimidinyl, 5-Chlor-2-pyrimidinyl, 6-Chlor-2-pyrimidinyl, 2-Chlor-5-pyrimidinyl, 4-Chlor-5-pyrimidinyl, 6-Chlor-5-pyrimidinyl, 2-Chlor-6-pyrimidinyl, 4-Chlor-6-pyrimidinyl, 5-Chlor-6-pyrimidinyl, 3-Chlor-2-pyrazinyl, 5-Chlor-2-pyrazinyl, 6-Chlor-2-pyrazinyl, 2-Chlor-3-pyrazinyl, 5-Chlor-3-pyrazinyl, 6-Chlor-3-pyrazinyl, 3-Fluor-4-pyridazinyl, 5-Fluor-4-pyridazinyl, 6-Fluor-4-pyridazinyl, 4-Fluor-3-pyridazinyl, 5-Fluor-3-pyridazinyl, 6-Fluor-3-pyridazinyl, 3-Fluor-5-pyridazinyl, 4-Fluor-5-pyridazinyl, 6-Fluor-5-pyridazinyl, 3-Fluor-6-pyridazinyl, 4-Fluor-6-pyridazinyl, 5-Fluor-6-pyridazinyl, 2-Fluor-4-pyrimidinyl, 5-Fluor-4-pyrimidinyl, 6-Fluor-4-pyrimidinyl, 4-Fluor-2-pyrimidinyl, 5-Fluor-2-pyrimidinyl, 6-Fluor-2-pyrimidinyl, 2-Fluor-5-pyrimidinyl, 4-Fluor-5-pyrimidinyl, 6-Fluor-5-pyrimidinyl, 2-Fluor-6-pyrimidinyl, 4-Fluor-6-pyrimidinyl, 5-Fluor-6-pyrimidinyl, 3-Fluor-2-pyrazinyl, 5-Fluor-2-pyrazinyl, 6-Fluor-2-pyrazinyl, 2-Fluor-3-pyrazinyl, 5-Fluor-3-pyrazinyl,6-Fluor-3-pyrazinyl, 2-Chlor-4-1,3,5-Triazinyl, 6-Chlor-4-1,3,5-Triazinyl, 4-Chlor-2-1,3,5-Triazinyl, 6-Chlor-2-1,3,5-Triazinyl, 2-Chlor-6-1,3,5-Triazinyl, 4-Chlor-6-1,3,5-Triazinyl, 2-Fluor-4-1,3,5-Triazinyl, 6-Fluor-4-1,3,5-Triazinyl, 4-Fluor-2-1,3,5-Triazinyl, 6-Fluor-2-1,3,5-Triazinyl, 2-Fluor-6-1,3,5-Triazinyl und 4-Fluor-6-1,3,5-Triazinyl. Ganz besonders bevorzugte Heteroarylreste sind ausgewählt aus der Gruppe 2-Chlor-4-pyridyl, 2-Fluor-4-pyridyl, 6-Chlor-4-pyridazinyl, 2-Chlor-4-pyrimdinyl, 6-Chlor-4-pyrimidinyl, 6-Fluor-4-pyridazinyl, 2-Fluor-4-pyrimdinyl, 6-Fluor-4-pyrimidinyl, 2-Chlor-4-1,3,5-Triazinyl, 2-Fluor-4-1,3,5-Triazinyl.

In bevorzugten Verbindungen der Formel (I) ist der Rest

$R^1$ ausgewählt aus der Gruppe Phenyl, 2-Methylphenyl, 3-Methylphenyl, 4-Methylphenyl, 2-Chlorphenyl, 3-Chlorphenyl, 4-Chlorphenyl, 2-Fluorphenyl, 3-Fluorphenyl und 4-Fluorphenyl und der Rest

$R^2$ ausgewählt aus der Gruppe 2-Chlor-4-pyridyl, 2-Fluor-4-pyridyl, 6-Chlor-4-pyridazinyl, 2-Chlor-4-pyrimdinyl, 6-Chlor-4-pyrimidinyl, 6-Fluor-4-pyridazinyl, 2-Fluor-4-pyrimdinyl, 6-Fluor-4-pyrimidinyl, 2-Chlor-4-1,3,5-Triazinyl, 2-Fluor-4-1,3,5-Triazinyl.

Insbesondere ist der Rest $R^1$ Phenyl und/oder der Rest $R^2$ 2-Chlor-4-pyridyl. Ganz besonders bevorzugt ist die Verbindung der Formel (I) N-(2-Chlor-4-pyridinyl)-N'-phenylharnstoff (Forchlorfenuron).

Bevorzugt werden die Verbindungen als konzentrierte Lösung transportiert und gelagert und vor dem Aufbringen mit einem Lösungsmittel zu einer Spritzbrühe verdünnt.

Die Wirkstoffe der Formel (I) sind in wässrigen und organischen Lösungsmitteln ohne weitere Hilfsstoffe, wie z.B. Tensiden und Surfactants gut bis ausreichend löslich. Zur Herstellung von Konzentraten und Spritzbrühen können bevorzugt Wasser, Alkohole und Polyole, insbesondere ausgewählt aus der Gruppe Methanol, Ethanol, Propanol, iso-Propanol, Butanol, Isobutylalkohol, Phenol, Benzylalkohol, Cyclohexanol, Glycerin, Ethylenglykol, Propylenglykol, Diethylenglykol, Diproplenglykol, Polyethylenglykol und Polypropylenglykol wobei die Hydroxygruppen auch verestert oder verethert sein können, wie z.B. Ethylacetat oder Dioxan, oder aromatische organische Lösungsmittel, insbesondere ausgewählt aus der Gruppe der Alkylphenole wie z.B. Xylol und Toluol, nicht-aromatische organische Lösungsmittel, insbesondere ausgewählt aus der Gruppe Cycloalkane, wie z.B. Cyclopentan und Cyclohexan, Ketone, insbesondere ausgewählt aus der Gruppe Aceton, Methylethylketon (MEK), Methylisobutylketon (MIBK), Cyclohexanon und Acetophenon, Dialkylester, Carbonsäureester einschließlich Fettsäureester, Carbonatester insbesondere aus der Gruppe Dimethylcarbonat, Diethylcarbonat, Dipropylcarbonat, Dibutylcarbonat, Ethylancarbonat, Propylancarbonat, Butylencarbonat, Amide, insbesondere Formamid, Dimethylformamid und Dimethylacetamid, Amine, Lactame, Pyrrolidone, wie z.B. N-Methylpyrrolidon und Nitrile, insbesondere Alkylnitrile, wie z.B. Acetonitril und Butyronitril oder aromatische Nitrile, wie z.B. Benzonitril oder Mischungen aus den genannten Lösungsmitteln verwendet werden.

Besonders bevorzugt werden Wasser oder Alkohole oder Mischungen daraus verwendet.

Die Wirkstoffe der Formel (I) können als konzentrierte Lösung bereitgestellt werden, wobei die Konzentration der Wirkstoff vorzugsweise in einem Bereich von 100 bis 150.000 ppm, besonders bevorzugt im Bereich von 500 bis 100.000 ppm liegt. Soweit nicht anderweitig angegeben ist die Einheit ppm (parts per million) den Gewichtsanteil des Wirkstoffs in der Lösung bezogen. Der Gehalt von Verbindungen der Formel (I) im Konzentrat liegt bevorzugt im Bereich von 0,1 g/l bis 150 g/l, besonders bevorzugt von 0,5 g/l bis 100 g/l, wobei bevorzugt das Lösungsmittel zumindest einen Alkohol umfasst.

In Spritzbrühen kann die Konzentration der Verbindungen der Formel (I) frei gewählt werden und hängt neben

der Handhabbarkeit insbesondere auch von der versprühten Menge an Spritzbrühe pro Hektar ab. Bevorzugt liegt die Konzentration der Wirkstoffe der Formel (I) in der Spritzbrühe im Bereich von 0,05 ppm bis 2.000 ppm, besonders bevorzugt im Bereich von 0,5 ppm bis 500 ppm, insbesondere im Bereich von 1 ppm bis 80 ppm. Typische Anwendungsmengen pro Hektar liegen im Bereich von 50 bis 1500 Liter Spritzbrühe / Hektar, bevorzugt zwischen 250 und 1000 Liter pro Hektar. Bevorzugt werden 0,1 g/ha bis 100 g/ha an Verbindungen der Formel (I), besonders bevorzugt von 0,5 bis 50 g/ha, insbesondere von 1,0 bis 20 g/ha auf die Pflanzenkulturen appliziert, um eine Stimulierung der Schädlingsabwehr in den Pflanzen hervorzurufen. Es hat sich herausgestellt, dass die zu verwendende Menge der Verbindungen der Formel (I) innerhalb der angegebenen Bereiche bei unterschiedlichen Pflanzensorten aus den Familien der Nachtschattengewächse und der Doldenblütler dafür ausreicht.

Die Wirkstoffe der Formel (I) können mit weiteren Komponenten gemischt bzw. formuliert vorliegen. Geeignete Komponenten, die in einer Mischung mit den Verbindungen der Formel (I) vorliegen können aus der Gruppe der Tenside, Emulgatoren, Netz- und Haftmittel, Penetrationsmittel, Anti-Driftmittel, Wirkstoffverstärker (Adjuvantien), Öle, Entschäumer, Antioxidantien, Konservierungsstoffe, Farbstoffe, Bitterstoffe, Verdicker, Füllstoffe, Zucker (Lactose), Stärke und Puffer ausgewählt werden. Die genannten Zusatzstoffe und Adjuvantien können bevorzugt bis zu einer Gesamtmenge von 80 Gew.-% im Konzentrat und bis zu 40 Gew.-% besonders bevorzugt zwischen 0,01 und 25 Gew.-%, insbesondere zwischen 0,1 und 15 Gew.-% in der Spritzbrühe enthalten sein.

Als Tenside bzw. Emulgatoren können insbesondere solche oberflächenaktiven Stoffe eingesetzt werden, die einen HLB-Wert von 5 bis 20 aufweisen. Weiterhin können als oberflächenaktive Stoffe insbesondere auch kationische, anionische oder nichtionische Tenside eingesetzt werden. Besonders bevorzugt können nichtionischen Tenside eingesetzt werden. Bevorzugte Tenside sind ausgewählt aus der Gruppe der Polyether-modifizierten Siloxane, alkoxylierten Alkylpolysiloxane, alkoxylierte Alkylphenole, Polyalkylenoxid-Blockcopolymere, alkoxylbasierte Blockcopolymere, aryloxylbasierte Blockcopolymere, der Fettalkoholglycoside, Fettsäurepolyglykolester, Fettalkoholpolyglykolether, alkoxylierte Fettalkohole, alkoxylierte Fettsäuren, alkoxylierte Fettsäure und/oder Fettalkoholester, alkoxylierte Fettsäureether, Fettsäuremonoglyceride, Fettsäurediglyceride, alkoxyliertes und hydriertes oder nicht hydriertes Rizinusöl, alkoxylierte Alkanolamide, Fettsäurealkanolamide. Alkoxylierte Tenside stellen jene dar, bei der Ethylenoxid, Propylenoxid, Butylenoxid und Styroloxid vorzugsweise angewendet werden.

Bevorzugte kationische Emulgatoren sind ausgewählt aus der Gruppe enthaltend langkettige quaternäre Ammoniumverbindungen wie Alkyltrimethylammoniumsalze und Dialkyldimethylammoniumsalze mit C8- bis C22-Alkylgruppen. Bevorzugte anionische Emulgatoren sind ausgewählt aus der Gruppe enthaltend Fettalkoholsulfate, Alkylethersulfate, Alkylbenzolsulfonate, Alkylaryletherphosphate, Alkyletherphosphate, funktionalisierte und nicht funktionalisierte, gesättigte und ungesättigte Alkylcarboxylate. Bevorzugte amphotere Emulgatoren sind ausgewählt aus der Gruppe enthaltend Sultainen und Betaine wie Fettsäureamidoalkylbetaine und Sulfobetaine und C8- bis C22-Alkylbetaine. Besonders bevorzugt sind nichtionische Emulgatoren aus der Klasse der Polyether-modifizierten Siloxane, alkoxylierten Alkylpolysiloxane, alkoxylierte Alkylphenole, Polyalkylenoxid-Blockcopolymere, alkoxylbasierte Blockcopolymere, aryloxylbasierte Blockcopolymere, Fettsäurepolyglykolester, Fettalkoholpolyglykolether, alkoxylierte Fettalkohole, alkoxylierte Fettsäuren, alkoxylierte Fettsäure und/oder Fettalkoholester, alkoxylierte Fettsäureether, alkoxyliertes und hydriertes oder nicht hydriertes Rizinusöl.

Gemäß der vorliegenden Erfindung können die Tenside und Emulgatoren bevorzugt in einer Menge von 0,1 bis 15 Gew.-% im Konzentrat bzw. in der Spritzbrühe vorliegen. Besonders bevorzugt kann das Konzentrat 0,1 bis 10 Gew.-% an Emulgatoren und ganz besonders bevorzugt 0,1 bis 5 Gew.-% umfassen. Die Spritzbrühe umfasst bevorzugt 0,1 Gew.-% bis 5 Gew.-% Tenside und Emulgatoren, besonders bevorzugt 0,2 Gew.-% bis 2 Gew.-%. Die Anwesenheit von Tensiden und Emulgatoren in den Konzentraten und Spritzbrühen ist allerdings nicht zwingend notwendig, da die Verbindungen der Formel (I) in gängigen Lösungsmitteln, insbesondere in Wasser und Alkoholen bzw. Mischungen davon problemlos löslich ist.

Das Konzentrat oder die Spritzbrühe kann neben dem Wirkstoff der Formel (I) auch ein Öl enthalten. Dabei soll im Zusammenhang mit der vorliegenden Erfindung unter einem Öl jedwedes Öl verstanden sein, dass für den Einsatz in der Landwirtschaft geeignet ist. Geeignete Öle sind somit solche Öle, die für Pflanzen verträglich sind. Insbesondere kann das Öl ausgewählt werden aus der Gruppe der natürlichen Öle, insbesondere Öle tierischer oder pflanzlicher Herkunft, und synthetische Öle. Gemäß der vorliegenden Erfindung können als Öl insbesondere natürliche Öle, insbesondere Pflanzenöle verwendet werden. Pflanzenöle sind allgemein bekannt und kommerziell erhältlich. Unter dem Begriff Pflanzenöle werden Öle aus ölliefernden Pflanzenarten wie Sojaöl, Maiskeimöl, Sonnenblumenöl, Rapsöl, Baumwollsaatöl, Leinöl, Kokosöl, Palmöl, Distelöl, Erdnussöl, Sesamöl, Traubenkernöl, Avocadoöl, Hanföl, Macadamiaöl, Haselnussöl, Kürbiskernöl, Chiaöl, Schwarzkümmelöl, Perillaöl, Karanjaöl, Jatrophaöl, Mandelöl, Jojobaöl, Neemöl, Tallöl, Walnussöl, Olivenöl, Maisöl oder Rhizinusöl, insbesondere Rapsöl verstanden, wobei unter den Pflanzenölen auch deren Umesterungsprodukte verstanden werden, z.B. Alkylester wie Rapsölmethylester, Rapsölethylester, Palmölmethylester, Kokosnussölmethylester, Sojaölmethylester.

Insofern synthetische Öle eingesetzt werden, sind Mineralöl, Paraffinöl, Weissöl, Siliconöl, sowie synthetische Fettsäureester, insbesondere Ester von Fettsäuren mit ungerader Kohlenstoffatomanzahl, wie beispielsweise C11- bis

C19-Fettsäuren, insbesondere ausgewählt aus der Gruppe Undecansäure, Tridecansäure, Pentadecansäure, Margarinsäure (Heptadecansäure) und Nonadecansäure, mit ein-, zwei- oder dreiwertigen C1- bis C5-Alkoholen, insbesondere Methanol, Ethanol, Propanol oder Butanol, bevorzugt. Gemäß der vorliegenden Erfindung kann das Konzentrat bzw. die Spritzbrühe insbesondere 0,1 bis 30 Gew.-% an Öl, insbesondere ein Pflanzenöl, umfassen. Bevorzugt kann das Konzentrat jedoch auch 0,1 bis 20 Gew.-% und besonders bevorzugt 0,5 bis 15 Gew.-% an Öl, bevorzugt an Pflanzenöl umfassen.

Als Anti-Driftmittel können z.B. Polymerbasierte Derivate wie Carboxymethylcellulose, Hydroxyethylcellulose, Methylcellulose, Polysaccharide, Polyacrylamide und Acrylamid, Ölbasierte aus Pflanzlicher wie Rapsöl oder Sojaöl und/oder Mineralölbasierter Quelle, Lecithinbasierte und Silikonbasierte wie Polyeteher-modifizierte Siloxane eingesetzt werden.

Als Entschäumer eignen sich z.B. silikonbasierte Derivate wie Organopolysiloxane, ölbasierte wie Fettsäureester, insbesondere Mono- und Diglyceride von Fettsäuren, Fettalkoholbasierte, Alkylphosphate, insbesondere Tributylphosphate oder Schauminhibitoren, insbesondere Silikonöl und Paraffinöl, Wachsbasierte und deren Emulsionen, Polymerbasierte wie Polyacrylate, Polyurethane, Polyglykole.

Weiterhin können Netz- Haft- und Penetrationsmittel den Konzentraten und Spritzbrühen zugesetzt werden, wobei die einzelnen Additive bevorzugt so ausgewählt werden, dass das Konzentrat oder die Spritzbrühe bei einer Temperatur von 25 °C eine Oberflächenspannung von weniger als 70 mN/m, bevorzugt von weniger als 60 mN/m, und ganz besonders bevorzugt von weniger als 40 mN/m, aufweist, wobei gleichzeitig oder unabhängig hiervon vorgesehen sein kann, dass das Konzentrat bei einer Temperatur von 25 °C eine Oberflächenspannung von mindestens 5 mN/m aufweist. Vorteilhaft ist weiterhin, wenn das Konzentrat bzw. die Spritzbrühe bei einer Temperatur von 25 °C eine Viskosität von weniger als 1 Pa*s aufweist, vorzugsweise weniger als 500 mPa*s, mehr bevorzugt von weniger als 100 mPa*s und noch mehr bevorzugt von weniger als 50 mPa*s, wobei die Viskosität durch die Auswahl geeigneter Verdicker wie Saccharide, Polysaccharide, Polyvinylalkohol, Polyacrylamid, Polyethylenoxid, Kieselgel eingestellt werden kann. Als Netzmittel können z.B. Tenside aus den nichtionischen, aninonischen, kationischen und amphoteren Tensiden eingesetzt werden. Besonders bevorzugt ist der Einsatz von nichtionischen Tensiden. Als Haftmittel können z.B. Polymerbasierte aus Minrealöl- und/oder Pflanzenbasierter Quelle, Ölbasierte wie Pflanzenöle, Paraffinöle, Mineralöl, Silikonöl und lecithinbasierte eingesetzt werden. Als Penetrationsmittel können z.B. Ölbasierte, Silikonbasierte, lecithinbasierte und alkoxylierte Tenside und Alkylphosphate eingesetzt werden.

Es hat sich gezeigt, dass die Harnstoffderivate gemäß Formel (I) in Nachtschattengewächsen (Solanaceae) und in Doldenblütler (Apiaceae oder Umbelliferae) als Pflanzenabwehrregulator wirken und einen Befall der Pflanzen mit schädlichen Bakterien und Pilzen hemmen können, ohne dass der Ertrag oder die Qualität der Kulturpflanzen darunter leiden.

Die Harnstoffderivate der Formel (I) können bevorzugt als Pflanzenabwehrregulator in Nachtschattengewächsen umfassend Pflanzensorten aus der Gruppe der Tomaten-, Kartoffel-, Tabak-, Paprika- und Auberginensorten verwendet werden. Die Verwendung in Doldenblütler umfasst insbesondere Petersilien-, Kümmel-, Anis-, Koriander-, Dill, Liebstöckel, Fenchel- und Selleriesorten.

Werden z.B. Gewächshaustomaten im Stadium der Blattentwicklung mit Verbindungen der Formel (I) behandelt, entwickeln die Pflanzen eine höhere Widerstandskraft gegen bakterielle Krankheitserreger der Gattung *Pseudomonas spp., Xanthomonas spp.*

*Ralstonia spp.* und gegen Pilze der Art *Phytophthora infestans.* So zeigen Pflanzenabwehrregulatoren der Formel (I) in Nachtschattengewächskulturen z.B. eine gute Wirksamkeit gegenüber den Schadorganismen *Pseudomonas syringae, insbesondere Pseudomonas syringae* pv*. tomato (Pst), Pseudomonas* syringae pv. *maculicola* und *Pseudomonas syringae* pv*. tabaci, Pseudomonas alisalensis, Pseudomonas corrugata, Pseudomonas aeruginosa, Pseudomonas solanacearum, Pseudomonas viridiflava* alles Bakterien, die der Gattung *Pseudomonas spp.* zugeordnet werden und Nachtschattengewächse, wie Tomaten, Kartoffeln, Tabak und Auberginen befallen. Weitere bakterielle Krankheitserreger, die häufig Nachtschattengewächse, insbesondere Tomaten und Kartoffeln befallen und die die Pflanzen mit den Verbindungen der Formel (I) vorbereitet werden können umfassen *Xanthomonas campestris,* insbesondere *Xanthomonas campestris* pv. *vesicatoria,* das häufig Tomaten befällt und *Ralstonia solanacearum,* das neben Tomaten auch häufig Kartoffeln und Tabak befällt. Weiterhin können die Abwehrkräfte von Nachschattengewächsen mit Verbindungen der Formel (I) auch gegen eine Infektion mit dem Pilz *Phytophthora infestans* aktiviert werden, der häufig Tomaten und Kartoffeln, seltener Auberginen und Paprika befällt. Insbesondere sind die von den behandelten Pflanzen ausgebildeten Krankheitssymptome im Vergleich zu den unbehandelten Pflanzen sehr gering. Eine signifikante Reduzierung der Symptome um bis zu 80 % konnte mittels der Krankheitsindizes Prävalenz, Schweregrad und McKinney-Index, beobachtet werden. Weiterhin zeigen die behandelten Pflanzenblätter gegenüber den unbehandelten Blättern ein verstärktes Wachstum. Die dazugehörige Genexpressionsanalyse zeigt, dass die Behandlung mit Verbindungen der Formel (I) die Signalwege in Tomatenpflanzen reguliert, indem sie den Cytokinin-aktivierten Signalweg aktiviert und den Auxin-aktivierten Signalweg und die Blattseneszenz unterdrückt. Dadurch wird die Abwehrbereitschaft der behandelten Pflanzen gegen bakterielle Infektionen und Pilzinfektionen gestärkt. Auch die Ausbildung einer systemisch erworbenen

Resistenz (SAR), wird durch die Behandlung mit Verbindungen der Formel (I) gefördert. Die Behandlung mit Verbindungen der Formel (I) auf Tomatenblättern induzieren also eine frühe Überexpression von Genen, die an der pflanzeneigenen Abwehr von bakteriellen Schadorgansimen und schädlichen Pilzen beteiligt sind.

Um eine ausreichende Stimulierung der Pflanzenabwehr zu erreichen können die Verbindungen der Formel (I) schon sehr früh appliziert werden. Eine erste Applikation mindestens 48 Stunden vor einer Infektion mit dem jeweiligen Erreger reicht aus, um die oben genannten Erreger effizient abzuwehren. Allerdings reicht hierfür auch eine erste Applikation 1 Woche bis 4 Wochen oder sogar noch früher vor einer Infektion aus. Der Applikation der Verbindungen der Formel (I) kann einmalig oder auf zwei, drei, vier oder noch mehr Zeitpunkte verteilt erfolgen.

Vorteilhaft ist in diesem Zusammenhang, dass der aktivierende Effekt der Verbindungen der Formel (I) langanhaltend ist und daher vor der Fruchtbildung stattfinden kann, so dass auf / in den Früchten keinerlei Rückstände der Verbindungen mehr zu finden sind. Bevorzugt findet die Applikation der Verbindungen der Formel (I) in der vegetativen Phase der Pflanzen, bevorzugt im Makrostadium kleiner BBCH 7, besonders bevorzugt kleiner BBCH 6 statt. Bevorzugt werden die Verbindungen ab BBCH 0, insbesondere ab BBCH 1 appliziert.

Die Gesamtmenge der applizierten Verbindung der Formel (I) kann in einer einmaligen Anwendung oder verteilt auf mehrere Anwendungen auf die zu schützenden Pflanzen aufgebracht werden. Weil die Stimulierung der Pflanzenabwehr durch die Verbindungen der Formel (I) dauerhaft ist, ist eine einmalig Anwendung anwendungstechnisch bevorzugt. Die Aufbringung kann aber auch auf zwei, drei, vier oder noch mehr Applikationszeitpunkte verteilt werden, wobei zwischen den Applikationszeitpunkten eine Zeitspanne von 1 Tag bis zu 4 Wochen, insbesondere zwischen 5 bis 14 Tagen liegen kann.

Neben der langandauernden Stimulierung der Pflanzenabwehr gegen Bakterien und Pilze zeichnen sich die Verbindungen der Formel (I) auch noch durch ihre elicitäre Wirkung aus. Die Verbindungen der Formel (I) aktivieren sofort die Abwehrmechanismen in Nachtschattengewächsen und Doldenblütler, die bakterielle Pathogene und Pilze abwehren oder deren Wachstum hemmen. Für eine Stimulierung der Pflanzenabwehr wird also der Erreger selbst, anders als bei der Aktivierung der Pflanzenabwehr durch einen Priming-Effekt, nicht benötigt.

Interessanterweise werden z.B. bei den mit *Pseudomonas syringae* pv. *tomato* inokulierten Pflanzen keine signifikanten Unterschiede zu den nicht inokulierten Kontrollpflanzen festgestellt, die stattdessen eine Stimulierung der pflanzlichen Abwehrreaktionen durch die Behandlung mit einer Verbindung der Formel (I) zeigen. Diese Ergebnisse zeigen eine direkte Stimulierung der Abwehrreaktionen durch die Behandlung mit einer Verbindung der Formel (I). Die Verbindungen der Formel (I) können also eine erhöhte Abwehrbereitschaft in den behandelten Pflanzen hervorrufen, ohne dass dafür die Anwesenheit eines mikrobiellen Erregers nötig ist (elicitäre Wirkung der Verbindungen der Formel (I)). Dadurch können die Pflanzen durch den Einsatz von Verbindungen der Formel (I) äußerst frühzeitig und effizient auf eine etwaig bevorstehende bakterielle Infektion bzw. eine Pilzinfektion vorbereitet werden.

Die Reduzierung des Befalls mit dem jeweiligen Krankheitserreger wird, soweit nicht explizit abweichend beschrieben, im Vergleich zu mit Verbindungen der Formel (I) unbehandelten Pflanzen der gleichen Sorte bestimmt. Die Reduzierung des Befalls äußerst sich insbesondere in einer Reduzierung der Häufigkeit und des Schweregrades des Befalls. Die Häufigkeit des Befalls ist dabei der Prozentsatz an Blättern die durch den Erreger befallen sind (Prävalenz), der Schweregrad des Befalls kann anhand der Einteilung der Blätter in Schwereklasse durch visuelle Inspektion vorgenommen werden. Die Schwere des Befalls kann auch mit Hilfe des McKinney-Index ermittelt werden.

Überraschenderweise hat sich zudem gezeigt, dass durch Anwendung der Pflanzenabwehrregulatoren gemäß Formel (I) auf Petersilien-Suspensionszellkulturen (Apiaceae) das pflanzliche Immunsystem in eine erhöhte Abwehrbereitschaft versetzt werden kann. Bei Zugabe von Verbindungen der Formel (I) in eine Petersilien-Suspensionszellkultur wird das pflanzliche Sekundärmetabolit Cumarin freigesetzt, welches eine antibakterielle und fungizide Wirkung aufweist. Dabei reichen z.B. schon sehr geringe Mengen Forchlorfenuron aus, um eine elicitäre Wirkung auf die pflanzlichen Zellen zu erhalten.

Überraschenderweise hat sich zudem gezeigt, dass durch Ausbringung von Verbindungen der Formel (I) bei Tomatenpflanzen ab dem Stadium der Blattentwicklung bis zum Stadium der Entwicklung der ersten Blüte mit dem gewünschten Effekt appliziert werden kann. Allerdings kann der Wirkstoff auch später, ab dem Stadium der Entwicklung der ersten Blüte, angewendet werden. Im Feldversuch kann mit der Applizierung insbesondere das Auftreten des Schadbildes, verursacht durch *Pseudomonas syringae* pv. *tomato,* und die Schwere des Schadbilds gegenüber unbehandelten Kontrollpflanzen deutlich verringert wird. Ebenso überraschend ist, dass Pflanzen, die mit den erfindungsgemäßen Regulatoren der Formel (I) behandelt werden, eine bessere Hemmung gegenüber dem Schadorganismus aufweisen als Tomatenpflanzen, die mit Kupfer behandelt werden. Somit kann der Anbauer die Ausbringung des unerwünschten Schwermetalls bzw. die Ausbringung von Pflanzenschutzmitteln gegen das Bakterium verringern oder sogar gänzlich darauf verzichten.

Somit ist ein bevorzugter Gegenstand der vorliegenden Erfindung die Verwendung von Verbindungen der Formel (I) als Pflanzenabwehrregulatoren in Tomatenpflanzen zur Hemmung von Infektionen mit *Pseudomonas syringae.*

Weiterhin hat sich überraschenderweise gezeigt, dass durch Ausbringung von Verbindungen der Formel (I) im Stadium der Blattentwicklung der Tomatenpflanzen der Ertrag an Tomaten erhöht wird. Überraschenderweise hat sich

gezeigt, dass neben der Ertragserhöhung auch die die Anzahl an vermarktungsfähigen Tomaten erhöht wird, also bevorzugte Kalibergrößen erzielt werden.

Überraschenderweise hat sich zudem gezeigt, dass durch Ausbringung von Verbindungen der Formel (I) bei Tomaten ab dem Stadium der Blattentwicklung oder ab dem Stadium der Entwicklung der ersten Blüte im Feldversuch das Auftreten des Schadbildes, verursacht durch *Xanthomonas campestris* pv. *vesicatoria,* und die Schwere des Schadbilds gegenüber unbehandelten Kontrollpflanzen deutlich verringert wird. Somit bestätigt sich auch bei diesem Schaderreger der infektionshemmende Effekt der Verbindungen der Formel (I). Der Anbauer kann auch bei einer drohenden Infektion der Tomatenpflanzen mit *Xanthomonas campestris* pv. *vesicatoria* die Ausbringung von Kupfer bzw. die Ausbringung von Pflanzenschutzmitteln gegen das Bakterium verringern oder sogar gänzlich darauf verzichten. Weiterhin hat sich auch in diesem Fall bestätigt, dass durch Ausbringung von Verbindungen der Formel (I) im Stadium der Blattentwicklung der Tomatenpflanzen der Ertrag an Tomaten erhöht wird.

Somit ist ein bevorzugter Gegenstand der vorliegenden Erfindung die Verwendung einer Verbindung der Formel (I) als Pflanzenabwehrregulator in Tomatenpflanzen zur Hemmung von Infektionen mit *Xanthomonas campestris.*

Überraschenderweise hat sich zudem gezeigt, dass durch Ausbringung von Verbindungen der Formel (I) bei Tomatenpflanzen ab dem Stadium der Blattentwicklung oder ab dem Stadium der Entwicklung der ersten Blüte im Feldversuch das Auftreten des Schadbildes, verursacht durch den Pilz *Phytophthora infestans,* und die Schwere des Schadbilds gegenüber unbehandelten Kontrollpflanzen deutlich verringert wird. Auch in diesem Fall kann der Anbauer die Ausbringung des unerwünschten Kupfers oder die Ausbringung von Pflanzenschutzmitteln gegen den Pilz verringern oder sogar gänzlich darauf verzichten. Weiterhin hat sich gezeigt, dass durch Ausbringung von Verbindungen der Formel (I) im Stadium der Blattentwicklung der Tomatenpflanzen auch in diesem Fall der Ertrag an Tomaten erhöht wird.

Somit ist ein bevorzugter Gegenstand der vorliegenden Erfindung die Verwendung einer Verbindung der Formel (I) als Pflanzenabwehrregulator in Tomatenpflanzen zur Hemmung von Infektionen mit *Phytophthora infestans.*

Überraschenderweise hat sich auch gezeigt, dass durch Ausbringung von Verbindungen der Formel (I) auf Kartoffelpflanzen (Solanaceae) ab dem Stadium der Blattentwicklung im Feldversuch das Auftreten des Schadbildes, verursacht durch *Ralstonia solanacearum,* einem Bakterium der Familie Burkholderiaceae und die Schwere des Schadbilds gegenüber unbehandelten Kontrollpflanzen verringert wird.

Somit ist ein bevorzugter Gegenstand der vorliegenden Erfindung die Verwendung einer Verbindung der Formel (I) als Pflanzenabwehrregulator in Tomatenpflanzen zur Hemmung von Infektionen mit *Ralstonia solanacearum.*

Weiterhin hat sich überraschenderweise gezeigt, dass durch Ausbringung von Verbindungen der Formel (I) im Stadium der Blattentwicklung der Kartoffelpflanzen der Ertrag an Kartoffeln und auch die die Anzahl an vermarktungsfähigen Kartoffeln erhöht wird. Im Zuge dessen verschieben sich zudem die Kalibergrößen von kleinen Kartoffeln ("small"), zu bevorzugt, größeren Kalibern ("medium" und "large").

**Ausführungsbeispiele:**

Verwendete Materialien:

Forchlorfenuron (Alzchem Trostberg GmbH)

Weißer, pulverförmiger Feststoff

Forchlorfenuron (1 %ige-Lösung in Ethanol)

Klares, flüssiges Konzentrat

Bion® 50 WG (Syngenta Agro AG)

Pflanzenschutzmittel mit dem Wirkstoff Acibenzolar-S-methyl Wasserdispergierbare Granulat-Formulierung

Poltiglia Disperss® (UPL Italia S.r.l.)

Pflanzenschutzmittel auf Basis von reinem Kupfermetall 20% (aus Hydroxysulfat) Wasserdispergierbare Granulat-Formulierung

Serenade® ASO (Bayer)

Biologisches Produkt auf Basis von *Bacillus amyloliquefaciens* Stamm QST Suspensionsformulierung

Verwendete Kulturpflanzen

Tomatensorten:

1) Marmande
2) Nunhems 6438
3) Heinz 3406
4) Heinz 1301
5) Liguria

Kartoffelsorten:

1) Agata
2) Colomba

Die verwendeten Kulturpflanzen sind kommerziell erhältlich.

Verwendete Erreger:

1) *Pseudomonas syringae* pv*. tomato*
2) *Xanthomonas campestris* pv*. vesicatoria*
*3) Ralstonia solanacearum*
*4) Phytophthora infestans*

Methoden und Verfahrensvorschriften:
1. Forchlorfenuron-Behandlungen und *Pseudomonas syringae* pv*. tomato* (Pst)-Inokulation an Tomatenpflanze Marmande

Versuche an Tomatenpflanze Marmande:

Für die Versuche wurden pro Behandlung zwanzig getopfte Tomatenpflanzen der Sorte Marmande mit dem vierten echten Blatt verwendet (BBCH 14). Forchlorfenuron (1 % in Ethanol) in einer Dosierung von 30 μL/L (Behandlung 3) und 60 μL/L (Behandlungen 2 und 5) in destilliertem Wasser wurde mit einem Handsprühgerät auf alle Blätter jeder Pflanze bis zum Abtropfen gesprüht (etwa 25 ml für jede Pflanze bei der ersten Anwendung und 30 ml für jede Pflanze bei der zweiten Anwendung). Die Anwendungen wurden zwei Mal im Abstand von 7 Tagen wiederholt. 48 Stunden nach der zweiten Anwendung wurden die Pflanzen mit der Pst -Zellsuspension (~108 KBE pro mL) beimpft, wobei etwa 5 mL pro Pflanze verteilt wurden (Behandlungen 4 und 5). Anstelle von Forchlorfenuron (1 % in Ethanol) wurde für die Behandlungen 1 und 4 destilliertes Wasser verwendet.

Behandlung 1 (Beispiel 1) - keine Forchlorfenuron-Behandlung, keine Pst-Innokulation Behandlung 2 (Beispiel 2) - 60 μL $L^{-1}$ Forchlorfenuron-Behandlung, keine Pst-Innokulation Behandlung 3 (Beispiel 3) - 30 μL $L^{-1}$ Forchlorfenuron-Behandlung, keine Pst-Innokulation Behandlung 4 (Beispiel 4) - keine Forchlorfenuron-Behandlung und Pst-Innokulation Behandlung 5 (Beispiel 5) - 60 μL $L^{-1}$ Forchlorfenuron-Behandlung und Pst-Innokulation

Unmittelbar nach der Inokulation wurden alle Pflanzen einzeln in einen durchsichtigen Polyethylenbeutel eingeschlossen und unter hoher Luftfeuchtigkeit mit einer Lichtbestrahlungsperiode von 16/8 h (natürliches Licht/-Dunkelheit) gehalten. Der Plastikbeutel wurde 24 Stunden später entfernt.

Datenanalyse an Tomatenpflanze Marmande:

Pst-Symptome, wie initial kleine, wassergetränkte Läsionen auf den Blättern, die sich im Verlauf der Infektion vergrößern und nekrotisch werden, wurden an fünf Blättern pro Pflanze je 5, 8 und 12 Tage nach der Inokulation beobachtet und bewertet. Pst-Symptome wurden anhand der Prävalenz (P, Prozentsatz der symptomatischen oder infizierten Blätter), des Schweregrads (S) = [$\Sigma$ (f x v)/n] und des McKinney-Index (MKI) [= $\Sigma$ (f x v)/(N x V) (McKinney H.H. (1923), Journal of Agricultural Research, Vol. 26, 195) bewertet.

Die Prävalenz ist der Prozentsatz der symptomatischen oder infizierten Blätter in einer Pflanzenpopulation. Sie gibt an, wie weit verbreitet eine Krankheit in einer bestimmten Pflanzenpopulation ist. Die Prävalenz wird berechnet, indem die Anzahl der symptomatischen oder infizierten Blätter durch die Gesamtzahl der untersuchten Blätter geteilt und mit 100 multipliziert wird.

Der Schweregrad (S) einer Krankheit wird durch die Formel [$\Sigma$ (f x v)/n] berechnet, wobei **f** die Häufigkeit der

Blätter in einer bestimmten Schweregradklasse ist, **v** der Wert der Schweregradklasse ist, und **n** die Gesamtzahl der untersuchten Blätter ist. Diese Formel summiert die Produkte aus der Häufigkeit und dem Wert der Schweregradklassen und teilt diese Summe durch die Gesamtzahl der Blätter. Der Schweregrad gibt an, wie stark die Krankheit die Blätter in einer Pflanzenpopulation betrifft. Die Schweregradklassen werden in der Regel durch visuelle Inspektion bestimmt und können je nach Krankheit und Pflanze variieren. Hier ist eine allgemeine Beschreibung der Schweregradklassen:

für Blattmissbildungen (Epinastie und Hyponastie): 0 = keine verformten Blätter; 1 = leicht verformte Blätter; 2 = mäßig verformte Blätter; 3 = ziemlich verformte Blätter; 4 = sehr verformte Blätter

für Blattchlorose: 0 = keine chlorotischen Blätter; 1 = 1 - 25 % der Blattoberfläche mit Chlorose; 2 = 26 - 50 % der Blätter mit Chlorose; 3 = 51 - 75 % der Blattoberfläche mit Chlorose; 4 = 76 - 100 % der Blattoberfläche mit Chlorose

für PST-Symptome: 0 = gesundes Blatt; 1 = Blatt mit 1 - 5 Bakterienflecken; 2 = Blatt mit 6 - 10 Bakterienflecken; 3 = Blatt mit 11 - 15 Bakterienflecken; 4 = bis zu 25 % der Blattfläche mit Bakterienflecken; 5 = 26 - 50 % der Blattfläche mit Bakterienflecken; 6 = 51 - 75 % der Blattfläche mit Bakterienflecken; 7 = 76 - 100 % der Blattfläche mit Bakterienflecken

Der McKinney-Index (MKI) wird durch die Formel [Σ (f x v)/(N x V)] berechnet, wobei **f** die Häufigkeit der Blätter in einer bestimmten Schweregradklasse ist, **v** der Wert der Schweregradklasse ist, N die Gesamtzahl der untersuchten Blätter ist, **V** der höchste Wert der Schweregradklasse ist.

Der McKinney-Index ist ein Maß für die Schwere einer Krankheit in einer Pflanzenpopulation und berücksichtigt sowohl die Häufigkeit als auch die Intensität der Krankheitssymptome. Er wird verwendet, um die Gesamtbelastung durch eine Krankheit in einer Pflanzenpopulation zu bewerten

Die Wirksamkeit gegenüber Häufigkeit und Schwere des Schadorgansimusbefalls ergibt sich aus dem Vergleich der mit verwendeten Materialien behandelten Beispiele gegenüber der unbehandelten Kontrolle. Hierbei werden zuerst die Werte der Kontrolle für die Häufigkeit und Schwere des Befalls zu jedem Auswertezeitpunkt auf 100 % Häufigkeit und Schwere und Werte der behandelten Beispiele in Relation zur Kontrolle gesetzt. Um die Wirksamkeit gegenüber Häufigkeit und Schwere darzustellen, werden alle prozentualen Werte ausgehend von einer Wirksamkeit von 100 % subtrahiert, sodass sich für die Kontrolle eine Wirksamkeit von 0 % ergibt und bei den behandelten Beispielen entsprechende Wirksamkeiten gegenüber der Kontrolle ergeben.

2. Methode zur RNA-Sequenzanalyse (Genexpressionsanalyse)

a) Vorbereitung der Proben für die RNA-Sequenzanalyse

Für jede Behandlung wurden neun Marmande Tomatenpflanzen verwendet. Die Proben wurden 12 und 24 Stunden nach der zweiten Forchlorfenuron-Behandlung (Beispiele 1 - 3) oder der Inokulation (Beispiele 4 und 5) entnommen. Zu jedem Probenentnahmezeitpunkt wurden drei biologische Proben von Pflanzen aus jedem der Beispiele 1-5 entnommen. Jede Probe umfasste also neun Blätter von drei unabhängigen Pflanzen (3 kleine Blätter/Pflanze). Die Blätter wurden in konische 50-mL-Röhrchen gefüllt, sofort mit flüssigem Stickstoff eingefroren und bis zur Verwendung bei minus 80 °C gelagert.

Die Gesamt-RNA wurde mit dem von Gambino et al. (2008) in Phytochemical analysis, 19(6), 520-525 beschriebenen Protokoll zur Isolierung von DNA aus Pflanzen extrahiert. Die Qualität der RNA wurde durch Analyse des Absorptionsverhältnisses (A) $\lambda 260/\lambda 280$ und $\lambda 260/\lambda 230$ mit dem NanoDrop 2000 Spektralphotometer (Thermo Fisher Scientific, MA, USA) und der Integrität mit einem Agilent 2100 Bioanalyzer System von Agilent Technologies bewertet. Die RNA-Konzentration wurde mit dem Qbit-Fluorometer und dem Qubit™ BR RNA Assay Kit (Thermo Fisher Scientific, MA, USA) bestimmt. Der Aufbau der cDNA-Bibliothek und die Sequenzierung erfolgte mit der NovaSeq 6000 Plattform Illumina Sequencing Technology.

b) RNA-Sequenz Datenanalyse

Die Sequenzierungsdaten jeder Probe wurden mit FastQC (https://www.bioinformatics.babraham.ac.uk/pro jects/fastqc/) auf ihre Qualität geprüft, gefiltert und auf das Referenzgenom der Tomate (*Solanum lycopersicum,* cv Heinz 1706; Version SL4.0 und Annotation ITAG4.0; (https://solgenomics.net/organism/Solanum _lycopersicum/genome) unter Verwendung von CLC Genomics Workbench 7.0.3 (CLCbio, Qiagen, Aarhus N, Dänemark) mit Standardparametern abgebildet. Die Expression jedes der 34.688 im Tomatengenom annotierten Gene wurde als Reads Per Kilobase per Million mapped reads (RPKM) gemessen. Ein RPKM ≥ 0,02 wurde als Kriterium für die Erkennung von exprimierten Genen verwendet. Für die differenzielle Genexpressionsanalyse in jedem Vergleich wurden die False Discovery Rate

(FDR) und die Fold Change (FC) mit Hilfe von edgeR (Robinson et al. Bioinformatics, Vol. 26, 139, 2010) bestimmt, das in CLC Genomics Workbench implementiert ist.

Gene, die zweifache oder größere Unterschiede in der Expression (FC≥ |2|) und FDR≤ 0,05 in behandelten gegenüber unbehandelten Proben in mindestens einem der Zeitpunkte und Forchlorfenuron-Rate aufwiesen, wurden als differentiell exprimierte Gene (DEGs) identifiziert und einer funktionellen Analyse unterzogen. Venn-Diagramme wurden mit InteractiVenn (http://www.interactivenn.net/) erstellt. Die Expressionsprofile der DEGs wurden durch hierarchisches Clustering und Heatmap der FC-Werte (T-MeV 4.9.0 Software) analysiert.

c) Funktionelle Analyse und Clustering von unterschiedlich exprimierten Genen (DEGs)

Die funktionelle Analyse der DEGs wurde mit der OmicsBox-Plattform v.2.1.2 (BioBam Bioinformatics S.L., Valencia, Spanien) durchgeführt (https://www.biobam.com/functionalanalysis/). Die Gensequenzen wurden durch BLASTX-Suche mit der nicht redundanten Proteindatenbank des NCBI, mit Begriffen aus der Genontologie (GO), mit Enzymcode-Nummern (EC), mit konservierten Proteindomänen und mit funktionellen Stellen funktionell annotiert. Die Anreicherungsanalyse (Fisher’s Exact Test) wurde verwendet, um funktionelle Kategorien von biologischen Prozessen, molekularen Funktionen und zellulären Komponenten (http://www.geneontology.org/) zu ermitteln, die in jedem DEG-Set im Vergleich zum gesamten Referenztranskriptom signifikant überrepräsentiert waren (FDR ≤ 0,05).

3. Feldversuche an Feldtomaten

Für die Versuche mit Tomaten wurden Felder im Mediterraneum ausgewählt. Die Versuche an Tomatenpflanzen wurden auf einer Versuchsfeldgröße von ca. 22 m$^2$ durchgeführt. Die Bewässerung wurde mittels Tröpfchenbewässerung durchgeführt. Die Kulturführung fand im Versuchszeitraum von Mai bis Juli ohne eine Ausbringung bakterizider Mittel statt. Die Applikation von Forchlorfenuron (1% in Ethanol), Bion® und Poltiglia Disperss ® wurde mittels Sprühapplikation auf Tomatenpflanzen mit der ersten Blüte bei der Sorte Nunhems 6438 (BBCH 51) oder mit dem sechsten echten Blatt bei der Sorte Heinz 3406 (BBCH 16) aufgebracht. Die Dosierrate von Forchlorfenuron (1 % in Ethanol) lag bei 10 g Al/ha (aktiver Wirkstoff pro Hektar). Die Gesamtmenge an aktivem Wirkstoff kann einmalig oder aufgeteilt auf verschiedene Zeitpunkte appliziert werden, wobei der Zeitpunkt BBCH 16 (bei Heinz 3406) bzw. der Zeitpunkt BBCH 51 (bei Nunhems 6438) der Applikation A entspricht. Applikation B erfolgt 7 Tage später, Applikation C 14 Tage später und Applikation D 21 Tage später.

Applikation A bedeutet folglich, dass einmalig 10 g Al/ha im Pflanzenstadium BBCH 16 bzw. BBCH 51 appliziert wurde. Applikation AB bedeutet entsprechend, dass 5,0 g Al/ha zum Zeitpunkt BBCH 16 oder BBCH 51 + 5,0 g Al/ha zum Zeitpunkt 7 Tage nach BBCH 16 oder BBCH 51 appliziert wurden, Applikation ABC bedeutet entsprechend, dass 3.3 g Al/ha zum Zeitpunkt BBCH 16 oder BBCH 51 + 3.3 g Al/ha zum Zeitpunkt 7 Tage nach BBCH 16 oder BBCH 51 + 3.3 g Al/ha zum Zeitpunkt 14 Tage nach BBCH 16 oder BBCH 51 appliziert wurden und Applikation ABCD bedeutet, dass 2.5 g Al/ha zum Zeitpunkt BBCH 16 oder BBCH 51 + 2.5 g Al/ha zum Zeitpunkt 7 Tage nach BBCH 16 oder BBCH 51 + 2.5 g Al/ha zum Zeitpunkt 14 Tage nach BBCH 16 oder BBCH 51 + 2.5 g Al/ha zum Zeitpunkt 21 Tage nach BBCH 16 oder BBCH 51 appliziert wurden und Applikation AD bedeutet, dass 5.0 g Al/ha zum Zeitpunkt BBCH 16 oder BBCH 51 + 5,0 g Al/ha zum Zeitpunkt 21 Tage nach BBCH 16 oder BBCH 51. Alle weiteren Applikationsweisen können entsprechend abgeleitet werden.

Die Dosierrate von Bion® lag bei 12,5 g Al/ha zum Zeitpunkt BBCH 16 (Applikation A) + 12.5 g Al/ha zum Zeitpunkt 7 Tage nach BBCH 16 (Applikation B) + 2.5 g Al/ha zum Zeitpunkt 14 Tage nach BBCH 16 (Applikation C) + 2.5 g Al/ha zum Zeitpunkt 21 Tage nach BBCH 16 (Applikation D).

Die Dosierrate von Poltiglia Disperss® lag bei 500 g Al/ha zum Zeitpunkt BBCH 16 oder BBCH 51 (Applikation A) + 500 g Al/ha zum Zeitpunkt 7 Tage nach BBCH 16 oder BBCH 51 (Applikation B) + 500 g Al/ha zum Zeitpunkt 14 Tage nach BBCH 16 oder BBCH 51 (Applikation C) + 500 g Al/ha zum Zeitpunkt 21 Tage nach BBCH 16 oder BBCH 51 (Applikation D).

Das Auftreten der Schaderreger ist durch eine natürliche Infektion der Pflanze mit Schaderregern feststellbar gewesen. Bei der Sorte Nunhems 6438 trat der Befall 49 Tage nach Applikation A auf, bei Sorte Heinz 3406 28 Tage nach Applikation A.

Auswertezeitpunkte Versuche mit Tomate Nunhems 6438: Die Auswertezeitpunkte lagen für den Auswertezeitpunkt 1 49 Tage nach Applikation der verwendeten Materialien zum Zeitpunkt BBCH 51 (Zeitpunkt A), für den Auswertezeitpunkt 2 7 Tage nach Auswertezeitpunkt 1, für den Auswertezeitpunkt 3 7 Tage nach Auswertezeitpunkt 2 und für den Auswertezeitpunkt 4 7 Tage nach Auswertezeitpunkt 3.

Auswertezeitpunkte Versuche mit Tomate Heinz 3406: Die Auswertezeitpunkte lagen für den Auswertezeitpunkt 1 28 Tage nach Applikation der verwendeten Materialien zum Zeitpunkt BBCH 16 (Zeitpunkt A), für den Auswertezeitpunkt 2 7 Tage nach Auswertezeitpunkt 1, für den Auswertezeitpunkt 3 7 Tage nach Auswertezeitpunkt 2, für den Auswertezeitpunkt 4 7 Tage nach Auswertezeitpunkt 3, für den Auswertezeitpunkt 5 7 Tage nach Auswertezeitpunkt 4, für Aus-

wertezeitpunkt 6 7 Tage nach Auswertezeitpunkt 5, für Auswertezeitpunkt 7 8 Tage nach Auswertezeitpunkt 6, für Auswertezeitpunkt 8 7 Tage nach Auswertezeitpunkt 7, für Auswertezeitpunkt 9 7 Tage nach Auswertezeitpunkt 8 und für Auswertezeitpunkt 10 6 Tage nach Auswertezeitpunkt 9,

Dosierstudie an Feldtomate Heinz 1301:

Für die Dosierstudie wurden Tomaten der Sorte Heinz 1301 verwendet, die in Feld in der Klimatischen Zone EPPO Mediterranean (EPOMED) gezogen wurden. Die Tomatenpflanzen wurden auf einer Plotgröße von ungefähr 25 - 26 $m^2$ ausgetragen. Die Bewässerung wurde mittels Tröpfchenbewässerung durchgeführt. Die Pflanzenpflege wurde im Versuchszeitraum von Mai bis Juli ohne Aufbringung bakterizider Mittel durchgeführt. Die Applikation von Forchlorfenuron (1 % in Ethanol), Poltiglia Disperss ® und Serenade® ASO wurde mittels Sprühapplikation auf Tomatenpflanzen mit der ersten Blüte bei der Sorte Heinz 1301 (BBCH 51) aufgebracht. Die Dosierrate von Forchlorfenuron (1 % in Ethanol) lag bei 1,25, 2,5, 5,0 und 10 g Al/ha zum Zeitpunkt BBCH 51 (Zeitpunkt A) (Applikation A) oder bei 1,25 g Al/ha zum Zeitpunkt BBCH 51 (Zeitpunkt A) + 1,25 g Al/ha zum Zeitpunkt 7 Tage nach BBCH 51 (Zeitpunkt B) (Applikation AB) oder bei 1,25 g Al/ha zum Zeitpunkt BBCH 51 (Zeitpunkt A) + 1,25 g Al/ha zum Zeitpunkt 14 Tage nach BBCH 51 (Zeitpunkt C) (Applikation AC) oder bei 2,5 g Al/ha zum Zeitpunkt BBCH 51 (Zeitpunkt A) + 2,5 g Al/ha zum Zeitpunkt 7 Tage nach BBCH 51 (Zeitpunkt B) (Applikation AB) oder bei 2,5 g Al/ha zum Zeitpunkt BBCH 51 (Zeitpunkt A) + 2,5 g Al/ha zum Zeitpunkt 14 Tage nach BBCH 51 (Zeitpunkt C) (Applikation AC) oder 1,25 g Al/ha zum Zeitpunkt BBCH 51 (Zeitpunkt A) + 1,25 g Al/ha zum Zeitpunkt 7 Tage nach BBCH 51 (Zeitpunkt B) + 1,25 Al/ha zum Zeitpunkt 14 Tage nach BBCH 51 (Zeitpunkt C) + 1,25 g Al/ha zum Zeitpunkt 21 Tage nach BBCH 51 (Zeitpunkt D) (Applikation ABCD).

Das Applikationsschema von Serenade® ASO lag bei 0,429 g Al/ha zum Zeitpunkt BBCH 51 (Zeitpunkt A) + 0,429 g Al/ha zum Zeitpunkt 7 Tage nach BBCH 51 (Zeitpunkt B) + 0,429 g Al/ha zum Zeitpunkt 14 Tage nach BBCH 51 (Zeitpunkt C) + 0,429 g Al/ha zum Zeitpunkt 21 Tage nach BBCH 51 (Zeitpunkt D) + 0,429 g Al/ha zum Zeitpunkt 28 Tage nach BBCH 51 (Zeitpunkt E) + 0,429 g Al/ha zum Zeitpunkt 35 Tage nach BBCH 51 (Zeitpunkt F) (Applikation ABCDEF).

Das Applikationsschema von Poltiglia Disperss® lag bei 500 g Al/ha zum Zeitpunkt BBCH 51 (Zeitpunkt A) + 500 g Al/ha zum Zeitpunkt 7 Tage nach BBCH 51 (Zeitpunkt B) + 500 g Al/ha zum Zeitpunkt 14 Tage nach BBCH 51 (Zeitpunkt C) + 500 g Al/ha zum Zeitpunkt 21 Tage nach BBCH 51 (Zeitpunkt D) (Applikationsschema ABCD).

Die Auswertezeitpunkte lagen für den Auswertezeitpunkt 1 36 Tage nach Applikation der verwendeten Materialien zum Zeitpunkt BBCH 51 (Zeitpunkt A), für den Auswertezeitpunkt 2 7 Tage nach Auswertezeitpunkt 1, für den Auswertezeitpunkt 3 8 Tage nach Auswertezeitpunkt 2, für den Auswertezeitpunkt 4 7 Tage nach Auswertezeitpunkt 3, für den Auswertezeitpunkt 5 7 Tage nach Auswertezeitpunkt 4, für Auswertezeitpunkt 6 7 Tage nach Auswertezeitpunkt 5 und für Auswertezeitpunkt 7 7 Tage nach Auswertezeitpunkt 6.

4. Feldversuche an Kartoffeln

Für die Versuche mit Kartoffeln wurden Felder im Mediterraneum ausgewählt. Die Versuche an Kartoffelpflanzen wurden auf einer Versuchsfeldgröße von 24 $m^2$ durchgeführt. Die Bewässerung wurde mittels Sprinkler durchgeführt. Die Kulturführung fand im Versuchszeitraum von Juni bis September ohne eine Ausbringung bakterizider Mittel statt. Die Applikation von Forchlorfenuron wurde gemäß Applikationszeitpunkten A, B, C, D nach Auflauf der Pflanze in Kalenderwoche 27 mittels Sprühapplikation aufgebracht. Hierbei lag der Zeitpunkt A für die Sorte Agata 7 Tage nach Auflaufen der Pflanze. Die Dosierrate von Forchlorfenuron (1% in Ethanol) lag bei 10 g Al/ha (aktiver Wirkstoff pro Hektar) zum Zeitpunkt A bei BBCH 13 (Applikation A) oder bei 5,0 g Al/ha zum Zeitpunkt A bei BBCH 13 + 5,0 g Al/ha zum Zeitpunkt B 18 Tage nach BBCH 13 zum Zeitpunkt BBCH 23 (Applikation AB) oder 2.5 g Al/ha zum Zeitpunkt A bei BBCH 13 + 2.5 g Al/ha zum Zeitpunkt B 18 Tage nach BBCH 13 zum Zeitpunkt BBCH 23 + 2.5 g Al/ha zum Zeitpunkt C 36 Tage nach BBCH 13 zum Zeitpunkt BBCH 35 + 2.5 g Al/ha zum Zeitpunkt D 49 Tage nach BBCH 13 zum Zeitpunkt BBCH 40 (Applikation ABCD).

Der Zeitpunkt A für die Sorte Colomba betrug 10 Tage nach Auflaufen der Pflanze. Die Dosierrate von Forchlorfenuron (1 % in Ethanol) lag bei 2.5 g Al/ha zum Zeitpunkt A bei BBCH 13 + 2.5 g Al/ha zum Zeitpunkt B 18 Tage nach BBCH 13 zum Zeitpunkt BBCH 23 + 2.5 g Al/ha zum Zeitpunkt C 35 Tage nach BBCH 13 zum Zeitpunkt BBCH 35 + 2.5 g Al/ha zum Zeitpunkt D 50 Tage nach BBCH 13 zum Zeitpunkt BBCH 40 (Applikation ABCD).

Das Auftreten der Schaderreger ist durch eine natürliche Infektion der Pflanzen mit Schaderregern feststellbar gewesen. Bei der Sorte Agate trat der Befall 49 Tage nach Applikation A auf, bei Sorte Colombo 35 Tage nach Applikation A.

Auswertezeitpunkte Versuche mit Kartoffel Agata: Die Auswertezeitpunkte lagen für den Versuch mit den Auswertezeitpunkt 1 49 Tage nach Applikation der verwendeten Materialien zum Zeitpunkt BBCH 13 (Zeitpunkt A), für den Auswertezeitpunkt 2 14 Tage nach Auswertezeitpunkt 2 und für den Auswertezeitpunkt 3 14 Tage nach Auswertezeitpunkt 2.

Auswertezeitpunkte Versuche mit Kartoffel Colombo: Die Auswertezeitpunkte lagen für den Versuch mit den Auswertezeitpunkt 1 50 Tage nach Applikation der verwendeten Materialien zum Zeitpunkt BBCH 13 (Zeitpunkt A), für den

Auswertezeitpunkt 2 13 Tage nach Auswertezeitpunkt 2 und für den Auswertezeitpunkt 3 14 Tage nach Auswertezeitpunkt 2.

5. Datenanalyse der Feldversuche

Die Häufigkeit und Schwere des Befalls durch Schadorganismen an den Tomaten- und Kartoffelpflanzen wurden in der Versuchsphase fortwährend beobachtet und bewertet. Pst-Symptome, wie initial kleine, wassergetränkte Läsionen auf den Blättern oder Tomaten, die sich im Verlauf der Infektion vergrößern und nekrotisch werden, wurden zu unterschiedlichen Zeitpunkten nach der Infektion beobachtet und bewertet.

Die Häufigkeit wird berechnet, indem die Anzahl der symptomatischen oder infizierten Blätter durch die Gesamtzahl der untersuchten Blätter geteilt und mit 100 multipliziert wird.

Die Schwere des Befalls durch Schadorganismen an den Tomaten- und Kartoffelpflanzen wird durch Vergleich an mehreren, befallenen Blätter durchgeführt und die Befallsfläche prozentual angegeben. Die Wirksamkeit gegenüber Häufigkeit und Schwere des Schadorgansimusbefalls ergibt sich aus dem Vergleich der mit verwendeten Materialien behandelten Beispiele gegenüber der unbehandelten Kontrolle. Hierbei werden zuerst die Werte der Kontrolle für die Häufigkeit und Schwere des Befalls zu jedem Auswertezeitpunkt auf 100 % Häufigkeit und Schwere und Werte der behandelten Beispiele in Relation zur Kontrolle gesetzt. Um die Wirksamkeit gegenüber Häufigkeit und Schwere darzustellen, werden alle prozentualen Werte ausgehend von einer Wirksamkeit von 100 % subtrahiert, sodass sich für die Kontrolle eine Wirksamkeit von 0 % ergibt und bei den behandelten Beispielen entsprechende Wirksamkeiten gegenüber der Kontrolle ergeben.

Der Gesamtertrag an Tomaten oder Kartoffel wurde mittels Auswaage ermittelt. Die Diskriminierung von marktfähigen und nicht marktfähigen Tomaten und Kartoffeln erfolgte durch Separierung von Früchten mit keinem oder geringem Makel gegenüber Früchten mit erkennbaren, bedeutenden Makeln, die nicht den Marktstandards entsprechen. Die Sortierung nach Kalibergrößen für Tomaten erfolgte nach Sortierung gemäß small (< 35 mm), medium (35 - 40 mm), large (40 - 47 mm), extra large (> 47 mm) und für Kartoffeln gemäß small (< 30 mm), medium (30 - 50 mm), large (50 - 60 mm) und extra large (> 60 mm). mittels Schablonen.

Die Daten aus den Bewertungen wurden mittels Varianzanalyse (ANOVA) mit der Software ARM (Agriculture Research Manager) 2022.5 von Gylling Data Management analysiert. Wurde ein signifikanter Effekt der Behandlung basierend auf der ANOVA-Analyse festgestellt, wurden die Unterschiede zwischen den Mittelwerten mit dem Student-Newman-Keuls-Test (p: 0,05) überprüft. Im Falle von Daten, die beim Bartlett-Test auf Homogenität heterogene Varianzen aufweisen ($P < 0,05$), wurden die Daten vor der Analyse transformiert mit: Log(X+1), empfohlen für Ziffern, oder Quadratwurzel aus X + 0,5 [$\sqrt{(X+0,5)}$] oder Arcsin Quadratwurzel % [Arcsin $\sqrt{(\%)}$], empfohlen für Prozentwerte.

6. Gewächshausversuche an Gewächshaustomaten

Die Tomatenpflanzen wurden auf einer Plotgröße von ungefähr 2 $m^2$ in Gewächshäusern ausgetragen. Die Bewässerung wurde mittels Tropfenbewässerung durchgeführt. Die Kulturführung wurde im Versuchszeitraum von Februar bis März ohne Aufbringung bakterizider Mittel durchgeführt. Die Applikation von Forchlorfenuron (1 % in Ethanol) und Poltiglia Disperss® wurde mittels Sprühapplikation auf Tomatenpflanzen mit dem sechsten echten Blatt bei der Sorte Liguria (BBCH 16) vorgenommen. Die Dosierrate von Forchlorfenuron (1 % in Ethanol) lag bei 10 g Al/ha (aktiver Wirkstoff pro Hektar) zum Zeitpunkt BBCH 16 (Applikation A) oder bei 5,0 g Al/ha zum Zeitpunkt BBCH 16 (Zeitpunkt A) + 5,0 g Al/ha zum Zeitpunkt 7 Tage nach BBCH 16 (Zeitpunkt B) (Applikation AB) oder bei 5,0 g Al/ha zum Zeitpunkt BBCH 16 (Zeitpunkt A) + 5,0 g Al/ha zum Zeitpunkt 14 Tage nach BBCH 16 (Zeitpunkt C) (Applikation AC) oder 2.5 g Al/ha zum Zeitpunkt BBCH 16 (Zeitpunkt A) + 2.5 g Al/ha zum Zeitpunkt 7 Tage nach BBCH 16 (Zeitpunkt B) + 2.5 g Al/ha zum Zeitpunkt 14 Tage nach BBCH 16 (Zeitpunkt C) + 2.5 g Al/ha zum Zeitpunkt 21 Tage nach BBCH 16 (Zeitpunkt D) (Applikation ABCD).

Die Dosierrate von Poltiglia Disperss® lag bei 500 g Al/ha zum Zeitpunkt BBCH 16 (Zeitpunkt A) + 500 g Al/ha zum Zeitpunkt 7 Tage nach BBCH 16 (Zeitpunkt B) + 500 g Al/ha zum Zeitpunkt 14 Tage nach BBCH 16 (Zeitpunkt C) + 500 g Al/ha zum Zeitpunkt 21 Tage nach BBCH 16 (Zeitpunkt D) (Applikation ABCD).

Die Inokulation der Krankheitserreger *Xanthomonas vesicatoria* und *Phytophthora infestans* wurde jeweils 7 Tage nach Umpflanzung der Tomatenpflanzen mit einer Konzentration von $1 \times 10^6$ cfu/ml (koloniebildende Einheiten pro Milliliter) in einer Kartoffel-Dextrose-Boullionlösung, "Potato Dextrose Broth (PDB)" durchgeführt. Die Erreger wurden von einem kommerziellen Tomatenfeld entnommen, im Labor isoliert und im flüssigen Medium PDB vermehrt. Die Aussaat der Tomatenpflanzenwurde einen Monat vor Versuchsbeginn durchgeführt, die Umpflanzung zum BBCH-Stadium 12-13 (zweites bis drittes Blatt am Hauptspross entfaltet). Die Inokulation wurde in einer automatisierten Sprühkammer durch gleichmäßige Besprühung von 500 mL PDB-Krankheitserreger-Suspension bis zum Abtropfen der Suspension durchgeführt.

Auswertezeitpunkte Versuche mit dem Krankheitserreger *Xanthomonas vesicatoria*: Die Auswertezeitpunkte lagen für den Versuch mit den Auswertezeitpunkt 1 7 Tage nach Applikation der verwendeten Materialien zum Zeitpunkt

BBCH 16 (Zeitpunkt A), für den Auswertezeitpunkt 2 8 Tage nach Auswertezeitpunkt 1, für den Auswertezeitpunkt 3 6 Tage nach Auswertezeitpunkt 2 und für den Auswertezeitpunkt 4 7 Tage nach Auswertezeitpunkt 3. Auswertezeitpunkte Versuche mit dem Krankheitserreger *Phytophthora infestans*: Die Auswertezeitpunkte lagen für den Versuch mit den Auswertezeitpunkt 1 15 Tage nach Applikation der verwendeten Materialien zum Zeitpunkt BBCH 16 (Zeitpunkt A), für den Auswertezeitpunkt 2 6 Tage nach Auswertezeitpunkt 1 und für den Auswertezeitpunkt 3 7 Tage nach Auswertezeitpunkt 2.

7. Datenanalyse der Gewächshausversuche

Die Häufigkeit und Schwere des Befalls der Schadorganismen an Tomatenpflanzen wurden in der Versuchsphase beobachtet und bewertet. Pst-Symptome, wie initial kleine, wassergetränkte Läsionen auf den Blättern oder Tomaten, die sich im Verlauf der Infektion vergrößern und nekrotisch werden, wurden zu unterschiedlichen Zeitpunkten nach der Infektion beobachtet und bewertet.

Die Häufigkeit wird berechnet, indem die Anzahl der symptomatischen oder infizierten Blätter durch die Gesamtzahl der untersuchten Blätter geteilt und mit 100 multipliziert wird.

Die Schwere des Befalls durch Schadorganismen an den Tomaten- und Kartoffelpflanzen wird durch Vergleich an mehreren, befallenen Blätter durchgeführt und die Befallsfläche prozentual angegeben.

Die Wirksamkeit gegenüber Häufigkeit und Schwere des Schadorgansimusbefalls ergibt sich aus dem Vergleich der mit verwendeten Materialien behandelten Beispiele gegenüber der unbehandelten Kontrolle. Hierbei werden zuerst die Werte der Kontrolle für die Häufigkeit und Schwere des Befalls zu jedem Auswertezeitpunkt auf 100 % Häufigkeit und Schwere und Werte der behandelten Beispiele in Relation zur Kontrolle gesetzt. Um die Wirksamkeit gegenüber Häufigkeit und Schwere darzustellen, werden alle prozentualen Werte ausgehend von einer Wirksamkeit von 100 % subtrahiert, sodass sich für die Kontrolle eine Wirksamkeit von 0 % ergibt und bei den behandelten Beispielen entsprechende Wirksamkeiten gegenüber der Kontrolle ergeben. Die Biomasse der Tomatenpflanzen wurde mittels Auswaage ermittelt. Die Daten aus den Bewertungen wurden mittels Varianzanalyse (ANOVA) mit der Software ARM (Agriculture Research Manager) 2022.5 von Gylling Data Management analysiert. Wurde ein signifikanter Effekt der Behandlung basierend auf der ANOVA-Analyse festgestellt, wurden die Unterschiede zwischen den Mittelwerten mit dem Student-Newman-Keuls-Test (p: 0,05) überprüft. Im Falle von Daten, die beim Bartlett-Test auf Homogenität heterogene Varianzen aufweisen (P < 0,05), wurden die Daten vor der Analyse transformiert mit: Log(X+1), empfohlen für Ziffern, oder Quadratwurzel aus X + 0,5 [$\sqrt{(X+0,5)}$] oder Arcsin Quadratwurzel % [Arcsin $\sqrt{(\%)}$], empfohlen für Prozentwerte.

8. Versuche an Petersilien-Zellkultur

Für die Versuche zur Identifizierung von Molekülen, die das Immunsystem der Pflanze direkt anregen und unmittelbar eine Abwehrantwort hervorrufen, wurde eine Petersilie Suspensionszellkultur als Medium gewählt. Die Testsubstanze Forchlorfenuron wurde zu 0,1 µM, 1 µM, 10 µM, 25 µM, 50 µM, und 100 µM in DMSO gelöst und jeweils in Zellsuspensionen angewandt. Diese wurden gegenüber einer unbehandelten Kontrolle, einem gelöstem Elicitor, dem Peptid-Elicitor Pep-13 aus dem Schaderreger *Phytophthora sojae* zu 25 µM in DMSO und dem Lösemittel DMSO verglichen. Die Suspensionen wurden für 24 h bei 25 °C kultiviert.

Diese Suspensionen werden dann auf Cumarin, einem pflanzlichen Sekundärmetabolit, getestet. Je intensiver die Abwehrreaktion in den Pflanzenzellen ist, desto höhere Mengen an Cumarin werden akkumuliert und sezerniert. Die Konzentration der Cumarine im Zellkulturmedium lässt sich über Fluoreszenzspektroskopie mittels Plate Reader CLARIOstar über die relative Lichteinheit (relative light unit, RLU) quantifizieren (Excitation 335 nm, Emission: 398 nm).

**Ergebnisse:**

**Beispiele 1-5:** Wirksamkeit von Forchlorfenuron im Hinblick auf die Stimulierung der pflanzlichen Schadorganismusabwehr in Tomatenpflanzen der Sorte Marmande gegen Pilze und Bakterien im Allgemeinen und gegen *Pseudomonas syringae* pv. *tomato* (Pst) im speziellen.

Tabelle 1: Häufigkeit, Schweregrad und McKinney-Index von *Pseudomonas syringae* pv. *tomato* (Pst) auf Forchlorfenuron-behandelten und unbehandelten Tomatenpflanzen Marmande

| | | | Wirksamkeit gegenüber Häufigkeit Schadorganismusbefalls [%] | | | Wirksamkeit gegenüber Schwere des Schadorganismusbefalls [%] | | |
|---|---|---|---|---|---|---|---|---|
| | | | Tag | | | Tag | | |
| Beispiel | Aktiver Inhaltsstoff (AI) | [AI] | 5 | 8 | 12 | 5 | 8 | 12 |

(fortgesetzt)

| | | | Wirksamkeit gegenüber Häufigkeit Schadorganismusbefalls [%] | | | Wirksamkeit gegenüber Schwere des Schadorganismusbefalls [%] | | |
|---|---|---|---|---|---|---|---|---|
| | | | Tag | | | Tag | | |
| 4 (Referenz) | Kontrolle (Kein AI) | - | 0 | 0 | 0 | 0 | 0 | 0 |
| 5 | Forchlorfenuron (1 % in Ethanol) | 60 $\mu L\ L^{-1}$ | 89 | 86 | 81 | 80 | 82 | 73 |
| | | | McKinney Index [%] | | | | | |
| | | | Tag | | | | | |
| Beispiel | Aktiver Inhaltsstoff (AI) | [AI] | 5 | 8 | 12 | | | |
| 4 (Referenz) | Kontrolle (Kein AI) | - | 6,8 | 8,3 | 9,3 | | | |
| 5 | Forchlorfenuron (1 % in Ethanol) | 60 $\mu L\ L^{-1}$ | 0,8 | 1,0 | 1,5 | | | |
| * vergangene Tage nach der zweiten Anwendung von Forchlorfenuron<br>Die Ergebnisse stellen Mittelwerte von zwanzig replizierten Pflanzen dar. | | | | | | | | |

Diskussion der Ergebnisse aus Tabelle 1

Der Vergleich zwischen mit Pst innokulierten Pflanzen des erfindungsgemäßen Beispiels 5 mit dem Beispiel 4 (Referenz) zeigt, dass im erfindungsgemäßen Beispiel 5 die Pst-Symptome auf den Blättern der untersuchten Tomatenpflanzen deutlich vermindert sind. Häufigkeit und Schweregrad der Pst-Infektion werden durch die Behandlung der Tomatenpflanzen mit Forchlorfenuron im Vergleich zu unbehandelten Pflanzen signifikant reduziert. Auch der McKinney Index verbessert sich durch die Behandlung mit Forchlorfenuron signifikant. Dabei zeigen die behandelten Pflanzen des erfindungsgemäßen Beispiels 5 während der gesamten Versuchsdauer signifikant geringere Symptome als die Referenzpflanzen des Beispiels 4, die keine Forchlorfenuron-Behandlung vor der künstlichen Inokulation der Pst-Bakteriensuspension erhalten haben.

An den Tomatenpflanzen des Beispiels 4 werden Symptome mit einer Häufigkeit von 27%, 29% und 32 % mit MKI von 6,8% nach 5 Tagen, 8,3% nach 8 Tagen und 9,3% nach 12 Tagen beobachtet. An den behandelten Tomatenpflanzen des Beispiels 5 werden nur sehr geringe Blattflecksymptome mit einer Häufigkeit von 3,0%, 4,0% und 6,0 % mit einem MKI von 0,8% nach 5 Tagen, 1,0 nach 8 Tagen und 1,5 % nach 12 Tagen beobachtet.

Die Schweregrad-Werte liegen zwischen 1% und 1,1% für Beispiel 4, während in Beispiel 5 deutlich niedrigere Werte von 0,2% - 0,3% beobachtet werden. Der Vergleich der Beispiele 4 und 5 zeigt somit überzeugend, dass mit der erfindungsgemäßen Forchlorfenuron-Behandlung von Tomatenpflanzen die Pst-Infektionssymptomatik im Vergleich zu unbehandelten Pflanzen signifikant reduziert werden kann und folglich gesündere und gestärkte Pflanzen herhalten werden. Dadurch kann z.B. der Verbrauch von Pestiziden oder von bedenklichen Mitteln wie Kupfer und Kupferverbindungen reduziert oder sogar ersetzt werden.

Tabelle 2: Anzahl der differentiell exprimierten Gene (DEGs; Fold Change ≥ |2| und False Ddiscovery Rate < 0,05) 12 Stunden (St1) und 24 Stunden (St2) nach der zweiten Besprühung mit Forchlorfenuron.

| | Beispiel | | 3 | 2 |
|---|---|---|---|---|
| | Forchlorfenuron (in Ethanol) | | 30 µL $L^{-1}$ | 60 µL $L^{-1}$ |
| Zeitpunkt | St1 | Anzahl DEGs | 59 | 141 |
| | | Aktivierte DEGs | 55 | 139 |
| | | Gehemmte DEGs | 4 | 2 |
| | St2 | Anzahl DEGs | 42 | 142 |
| | | Aktivierte DEGs | 39 | 115 |
| | | Gehemmte DEGs | 3 | 27 |

Diskussion der Ergebnisse aus Tabelle 2:

Aus den erfindungsgemäßen Beispielen 2 und 3 ist ersichtlich, dass unterschiedliche Konzentrationen an Forchlorfenuron Einfluss auf die Genexpression in den untersuchten Tomatenpflanze haben. Eine Dosis von 60 µL/L der Forchlorfenuron-Formulierung induziert im Vergleich zu einer Dosis von 30 µL/L sowohl 12 Stunden als auch 24 Stunden nach der zweiten Besprühung mit dem Wirkstoff eine größere Anzahl aktivierter DEGs.

Fold Change (FC) ist ein Maß für die Veränderung der Genexpression. Ein FC von 2 bedeutet, dass das Gen in der behandelten Probe doppelt so hoch oder halb so hoch exprimiert wird wie in der Kontrollprobe und somit doppelt so stark auf die Behandlung reagiert. False Discovery Rate (FDR) ist ein statistisches Maß, das die Wahrscheinlichkeit angibt, dass ein als signifikant identifiziertes Ergebnis tatsächlich falsch positiv ist. Ein FDR von weniger als 0,05 bedeutet, dass weniger als 5% der identifizierten DEGs falsch positiv sind.

Tabelle 3: Expressionsprofil des WRKY-Transkriptionsfaktors 41 (Solyc01g095630.3, FC ≥ 2.1) zu verschiedenen Zeitpunkten nach Behandlung mit Forchlorfenuron und Inokulation mit *Pseudomonas syringae* pv. *tomato* (Pst).

| | | | Expressionslevel |
|---|---|---|---|
| Forchlorfenuron (in Ethanol) | Zeitpunkt* / Pst-Inokulation | Beispiel | WRKY 41 |
| | St1 - nicht inokuliert (Referenz) | 1 | 38,60 |
| 30 µL $L^{-1}$ | St1 - nicht inokuliert | 3 | 81,11 |
| -- | St2 - nicht inokuliert (Referenz) | 1 | 24,07 |
| 30 µL $L^{-1}$ | St2 - nicht inokuliert | 3 | 53,66 |
| -- | St1 - nicht inokuliert (Referenz) | 1 | 38,60 |
| 60 µL L-1 | St1 - Pst inokuliert | 5 | 112,01 |
| -- | St2 - nicht inokuliert (Referenz) | 1 | 24,07 |
| 60 µL L-1 | St2 - Pst inokuliert | 5 | 56,45 |
| -- | St3 - nicht inokuliert (Referenz) | 1 | 51,15 |
| 60 µL L-1 | St3 - Pst inokuliert | 5 | 156,27 |
| -- | St4 - nicht inokuliert (Referenz) | 1 | 49,51 |
| 60 µL L-1 | St4 - Pst inokuliert | 5 | 161,10 |
| -- | St3 - Pst inokuliert (Referenz) | 4 | 67,02 |
| 60 µL L-1 | St3 - nicht inokuliert | 2 | 167,07 |
| -- | St4 - Pst inokuliert (Referenz) | 4 | 59,19 |

(fortgesetzt)

| | | | Expressionslevel |
|---|---|---|---|
| Forchlorfenuron (in Ethanol) | Zeitpunkt* / Pst-Inokulation | Beispiel | WRKY 41 |
| 60 µL L-1 | St4 - nicht inokuliert | 2 | 108,16 |
| *St1 = 12 h Stunden nach dem zweiten Forchlorfenuron-Spray; St2 = 24 h Stunden nach dem zweiten Forchlorfenuron-Spray; St3 - 12 h nach Pst-Inokulation; St4 - 24 h nach Pst-Inokulation | | | |

Diskussion der Ergebnisse aus Tabelle 3:

Das Protein WRKY41 (Solyc01g095630.3, FC ≥ 2.1) gehört zu einer Gruppe von Transkriptionsfaktoren (WRKYs) die in Tomaten als Reaktion auf abiotischen oder biotischen Stress verstärkt gebildet werden. Als biotische Stressfaktoren, die eine verstärkte WRKY41-Bildung in Tomaten hervorrufen, sind eine Vielzahl von mikrobiellen Infektionen, wie unter anderem auch *Pseudomonas syringae pv tomato* (Pst), bekannt (Lian, Q. et al., Int. J. Mol. Sci. 2022, 23, 1267). Daher eignet sich das Protein als Marker im Hinblick auf die Ausbildung einer Resistenz in Tomatenpflanzen gegen bakterielle Infektionen.

Aus den erfindungsgemäßen Beispielen 2, 3 und 5 wird ersichtlich, dass die Expression des WRKY41-Gens sowohl bei den Applikationsraten 30 µL/L und 60 µL/L als auch bei den Zeitpunkten St1 und St2 signifikant erhöht ist. Auch bei den nachfolgenden Probeentnahmezeitpunkten St3 und St4 zeigt sich eine erhöhte Expression bei den mit Forchlorfenuron behandelten Tomatenpflanzen im Vergleich zu den unbehandelten Pflanzen. Dies ist sowohl für die nicht mit Pst infizierten als auch für die mit Pst inokulierten Pflanzen zu beobachten.

Das Expressionsniveau der für WRKY41 codierenden Gene ist in den mit Forchlorfenuron behandelten Tomatenpflanzen (erfindungsgemäße Beispiele 2, 3 und 5) deutlich höher als in unbehandelten Pflanzen. Hierbei sind die Expressionslevel im Hinblick auf die WRKY41-Expression um den Faktor 1,8 bis 3,3 erhöht. Dies zeigt, dass die Behandlung der Tomatenpflanzen mit Forchlorfenuron geeignet ist die pflanzliche Abwehrreaktion deutlich zu stimulieren, ohne dass eine Infektion mit dem Erreger stattgefunden haben muss (elicitäre Wirkung).

Tabelle 4: Prozentualer Anteil der Gen-Ontologie Terme ausgewählter biologischer Prozesse und molekularer Funktionen, die signifikant angereichert sind (FDR ≤ 0,05) unter den DEGs, die hochreguliert sind (FC ≥ |2| und FDR < 0,05) in behandelten Blättern im Vergleich zu unbehandelten Blättern von Tomaten, 12 Stunden nach der zweiten Besprühung mit 30 µL/L oder 60 µL/L von Forchlorfenuron (1 % in Ethanol).

| | Formulierung | Beispiele 1 & 4 (Mittelwerte) | Beispiel 3 | Beispiele 2 & 5 (Mittelwerte) |
|---|---|---|---|---|
| | Forchlorfenuron (in Ethanol) | 0 | 30 µL $L^{-1}$ | 60 µL $L^{-1}$ |
| | Behandlung | unbehandelt [%] | behandelt [%] | behandelt [%] |
| Gen Ontologie Term Anteile [%] | Reaktion auf Chitin | 0,51 | 12,7 | - |
| | Cytokinin-aktivierter Signalweg | 0,30 | 7,27 | - |
| | Abwehrreaktion auf Pilze | 2,14 | - | 10,8 |
| | Abwehrreaktion auf Bakterien | 3,44 | - | 10,8 |
| | Reaktion auf Chitin | 0,48 | - | 10,1 |
| | Reaktion auf Salicylsäure | 0,71 | - | 5,04 |
| | Cytokinin-aktivierter Signalweg | 0,34 | - | 3,60 |

Diskussion der Ergebnisse aus Tabelle 4:

Aus den Ergebnissen in Tabelle 4 wird ersichtlich, dass bei Anwendung von Forchlorfenuron an Tomatenpflanzen eine Aktivierung einer Vielzahl von biologischen Abwehrprozessen gegen Pilze und Bakterien zu einem sehr frühen Zeitpunkt St1 stattfindet. Dies geht aus einem Vergleich der erfindungsgemäßen Beispiele 2, 3 und 5 gegenüber den Referenzversuchen Beispiel 1 und 4 hervor. In den erfindungsgemäßen Beispielen wird durch die Applikation von Forchlorfenuron insbesondere die Expression folgender funktioneller Gruppen von Gene gemäß den Gen-Ontologie Kategorien beeinflusst:

- Gene, die mit pflanzlichen Abwehrreaktionen gegen Bakterien und Pilze assoziiert sind,
- Gene, die bekanntermaßen auf Chitin reagieren, wobei Chitin induzierte Signalwege bei der Abwehr von Pilzen eine Rolle spielen;
- Gene, die auf Salicylsäure reagieren, wobei Salicylsäure-induzierte Signalwege bei der systematisch erworbenen Resistenz eine wichtige Rolle spielen;
- Gene, die bei der Aktivierung von Cytokinin-Signalwegen eine Rolle spielen.

Somit zeigt sich, dass nach einer Forchlorfenuron-Behandlung von Tomaten die Abwehrmechanismen der Pflanze über unterschiedliche funktionelle Gengruppen hinweg aktiviert werden, wodurch die Pflanzen gegenüber Pilzen und Bakterien resistenter werden.

Tabelle 5: Prozentualer Anteil der Gen Ontologie Terme biologischer Prozesse und molekularer Funktionen, die signifikant angereichert sind (FDR ≤ 0,05) unter den DEGs, die hochreguliert sind (FC ≥ |2| und FDR < 0,05) in behandelten Blättern im Vergleich zu unbehandelten Blättern von Tomaten, 24 Stunden nach der zweiten Besprühung mit 30 µL L-1 oder 60 µL L-1 von Forchlorfenuron (1 % in Ethanol).

| | Formulierung | Beispiele 1 & 4 (Mittelwerte) | Beispiel 3 | Beispiele 2 & 5 (Mittelwerte) |
|---|---|---|---|---|
| | Forchlorfenuron (1% in Ethanol) | 0 | 30 µL $L^{-1}$ | 60 µL $L^{-1}$ |
| | Behandlung | unbehandelt | behandelt | behandelt |
| Gen Ontologie Term Anteile [%] | Cytokinin-aktivierter Signalweg | 0,30 | 10,3 | - |
| | Abwehrreaktion auf Pilze | 2,13 | - | 14,8 |
| | Reaktion auf ein Bakterium | 1,89 | - | 8,70 |
| | Cytokinin-aktivierter Signalweg | 0,29 | - | 5,22 |

Diskussion der Ergebnisse aus Tabelle 5:

Ähnliche Reaktionen auf Forchlorfenuron-Anwendungen wurden in den Beispiele 2, 3 und 5 gegenüber den Beispielen 1 und 4 (Referenzbeispiele) ersichtlich, sodass Reaktionen wie Abwehrreaktion auf Pilze und Bakterien und Cytokinin-aktivierter Signalweg auch 24 Stunden nach der Behandlung zum Zeitpunkt St2 aufgezeichnet werden konnten. Auch nach 24 h der Forchlorfenuron-Behandlung aktiviert die Pflanze Abwehrmechanismen über differentiell exprimierte funktionelle Gengruppen (DEGs). Durch die Behandlung mit Forchlorfenuron werden also Abwehrreaktion in den Pflanzen gegen Pilze und Bakterien stimuliert, ohne dass die pathogenen Mikroorganismen die Pflanzen befallen haben müssen (elicitäre Wirkung).

Tabelle 6: Effekt auf Anzahl der differentiell exprimierten Gene (DEGs; FC ≥ |2| und FDR < 0,05) 12 und 24 Stunden nach der Inokulation mit *Pseudomonas syringae* pv *tomato* (Pst) auf Tomatenpflanzen der Sorte Marmande

| | Formulierungen | | **Beispiel 2** | **Beispiel 5** |
|---|---|---|---|---|
| | Forchlorfenuron (1 % in Ethanol) | | 60 μL $L^{-1}$ | 60 μL $L^{-1}$ |
| | Pst-Inokulation | | nicht inokulierte Kontrolle | inokuliert |
| Zeitpunkt | St3 | Anzahl DEGs | 358 | 222 |
| | | Aktivierte DEGs | 330 | 209 |
| | | Gehemmte DEGs | 28 | 13 |
| | St4 | Anzahl DEGs | 455 | 220 |
| | | Aktivierte DEGs | 317 | 144 |
| | | Gehemmte DEGs | 138 | 76 |

Diskussion der Ergebnisse aus Tabelle 6:

12 Stunden (St3) und 24 Stunden (St4) nach der Inokulation mit Pst, d. h. 60 Stunden (St3) und 72 Stunden (St4) nach der letzten Besprühung mit der erfindungsgemäßen Forchlorfenuron-Formulierung (60 μL/L), stieg die Zahl der differentiell exprimierten Gene, die in den behandelten Blättern im Vergleich zu den unbehandelten Blättern hochreguliert wurden, sowohl bei den nicht inokulierten Kontrollpflanzen als auch bei den mit Pstinokulierte Pflanzen deutlich an.

Tabelle 7: Expressionsprofile bestimmter DEGs oder Gruppen von DEGs, die mit der pflanzlichen Abwehr von Pilzen und Bakterien assoziiert werden, zu verschiedenen Zeitpunkten nach Behandlung mit Forchlorfenuron.

| | | | Expressionslevel | | |
|---|---|---|---|---|---|
| Forchlorfenuron (in Ethanol) | Zeitpunkt Pst-Inokulation | Beispiel | Defensin-Protein | Endochitinase | NIMIN2c |
| -- | St1 (Referenz) | 1 | 38,18 | 9,27 | 26,88 |
| 30 μL $L^{-1}$ | St1 | 2 | 65,49 | 12,73 | 46,72 |
| -- | St2 (Referenz) | 1 | 10,13 | 4,83 | 21,49 |
| 30 μL $L^{-1}$ | St2 | 2 | 24,18 | 9,84 | 36,60 |
| -- | St1 (Referenz) | 1 | 38,18 | 9,27 | 26,88 |
| 60 μL $L^{-1}$ | St1 | 3 | 90,28 | 23,88 | 124,23 |
| -- | St2 (Referenz) | 1 | 10,13 | 4,83 | 21,49 |
| 60 μL $L^{-1}$ | St2 | 3 | 47,33 | 17,51 | 125,79 |
| St1 = 12 h Stunden nach dem zweiten Forchlorfenuron-Spray; St2 = 24 h Stunden nach dem zweiten Forchlorfenuron-Spray; | | | | | |

Fortsetzung der Tabelle 7

| | | | Expressionslevel | | | |
|---|---|---|---|---|---|---|
| Forchlorfenuron (in Ethanol) | Zeitpunkt Pst-Inokulation | Beispiel | WRKY 51 | WRKY 53 | WRKY 33 | WRKY 80 |
| -- | St1 (Referenz) | 1 | 32,84 | 12,09 | 14,14 | 41,16 |
| 30 μL $L^{-1}$ | St1 | 2 | 44,32 | 25,97 | 25,35 | 70,33 |
| -- | St2 (Referenz) | 1 | 14,37 | 4,69 | 4,20 | 20,67 |
| 30 μL $L^{-1}$ | St2 | 2 | 24,58 | 10,77 | 10,92 | 41,31 |
| -- | St1 (Referenz) | 1 | 32,84 | 12,09 | 14,14 | 41,16 |
| 60 μL $L^{-1}$ | St1 | 3 | 77,47 | 40,70 | 36,85 | 106,93 |
| -- | St2 (Referenz) | 1 | 14,37 | 4,69 | 4,20 | 20,67 |
| 60 μL $L^{-1}$ | St2 | 3 | 41,96 | 8,92 | 9,04 | 47,49 |
| St1 = 12 h Stunden nach dem zweiten Forchlorfenuron-Spray; St2 = 24 h Stunden nach dem zweiten Forchlorfenuron-Spray; | | | | | | |

Diskussion der Ergebnisse aus Tabelle 7:

Aus den erfindungsgemäßen Beispiele 2, 3 und 5 ist ersichtlich, dass durch die Anwendung von Forchlorfenuron eine Vielzahl von Genen aktiviert wird, die für Abwehrreaktion von Pflanzen gegen Pilze und Bakterien zuständig sind. Dies gilt sowohl für die beiden Applikationsraten 30 und 60 μL/L als auch für die Zeitpunkte St1 und St2 (12 und 24 Stunden nach der zweiten Applikation von Forchlorfenuron).

Die interessantesten DEGs, die funktionell den Pflanzabwehrreaktionen zuzuordnen sind, sind in Tabelle 7 dargestellt. Darunter fällt das Defensin-Protein (Solyc07g007755.2, FC≥2.2), welches ein anti-mikrobielle Peptid darstellt und der Abwehr von Bakterien und Pilzen dienen. Die Expressionslevel sind nach Behandlung je nach Beispiel um den Faktor 1,7 bis 4,7 erhöht.

Ebenso erhöht sind DEGs der sauren Endochitinase (Solyc05g050130. 5, FC≥2.5), welche für die Chitinspaltung zuständig ist. Da Chitin ein Bestandteil der Zellwände von Pilzen ist, sind Endochitinasen für Pflanzen wichtig zur Abwehr dieser Mikroorganismen. Die Expressionslevel dieser DEGs sind je nach Beispiel und Probenzeitpunkt um den Faktor 1,4 bis 3,6 erhöht.

Parallel werden auch Gene der WRKY-Transkriptionsfaktoren durch die Behandlung mit Forchlorfenuron verstärkt exprimiert. Die WRKY-Transkriptionsfaktoren regulieren insbesondere die Reaktionen von Pflanzen auf biotischen und abiotischen Stress. Auch hier sind die Expressionslevel der verschiedenen WRKY-Transkriptionsfaktoren durch die Forchlorfenuron-Behandlung erhöht. Bei WRKY51, welcher den Jasmoninsäure-Signalweg und somit die Abwehr gegen Bakterien und Pilzen reguliert, um den Faktor 1,3 bis 4,3, WRKY53, welcher die Seneszenz- und Stressregulation und die Abwehr gegen Bakterien und Pilze reguliert, um den Faktor 1,9 bis 3,4, WRKY33, als zentraler Abwehrfaktor gegen Pilze und Bakterien, um den Faktor 1,8 bis 2,6 und WRKY80, welcher insbesondere die Pilzabwehr aktiviert, um den Faktor 1,7 bis 2,6.

Das NIMIN2c-Protein (Solyc03g119590.1), ein positiver Regulator der systemischen erworbenen Resistenz (SAR), der die Induktion von Pathogenese-bezogenen (PR) Genen über die Salicylsäure (SA)-Regulierung die systemisch erworbene Resistenz steuert, wurde in allen behandelten Pflanzen durch die Forchlorfenuron-Behandlung signifikant stimuliert, um den Faktor 1,7 bis 5,8 erhöht.

Tabelle 8: Prozentualer Anteil der Gen Ontologie Terme für biologische Prozesse, molekulare Funktionen und zelluläre Komponenten, die signifikant (FDR ≤ 0,05) unter den DEGs angereichert sind, die in behandelten gegenüber unbehandelten Blättern von nicht inokulierten oder Pst-inokulierten Tomatenpflanzen zum Zeitpunkt St3 hochreguliert sind (FC ≥ |2| und FDR < 0,05).

| | Formulierung | Beispiel 1 (Referenz) | Beispiel 2 | Beispiel 5 |
|---|---|---|---|---|
| | Forchlorfenuron (in Ethanol) | 0 | 60 µL $L^{-1}$ | 60 µL $L^{-1}$ |
| | Behandlung | unbehandelt | Nicht inokulierte Kontrolle | Pst-inokuliert |
| Gen Ontologie Term Anteile [%] | Abwehrreaktion auf Pilze | 4,79 | 9,70 | - |
| | Abwehrreaktion auf ein Bakterium | 1,54 | 5,45 | - |
| | Reaktion auf Chitin | 0,48 | 5,15 | - |
| | Reaktion auf Salicylsäure | 0,73 | 3,33 | - |
| | zelluläre Reaktion auf Moleküle bakteriellen Ursprungs | 0,04 | 1,52 | - |
| | Cytokinin-Dehydrogenase-Aktivität | 0,05 | 1,52 | - |
| | Regulierung des Salicylsäure-Biosyntheseprozesses | 0,05 | 1,21 | - |
| | Cytokinin-Katabolismus-Prozess | 0,02 | 0,91 | - |
| | Abwehrreaktion auf Pilze | 2,09 | - | 13,9 |
| | Abwehrreaktion auf ein Bakterium | 1,55 | - | 6,22 |
| | Reaktion auf Chitin | 0,50 | - | 5,26 |
| | Reaktion auf Salicylsäure | 0,73 | - | 4,78 |
| | Reaktion auf Moleküle bakteriellen Ursprungs | 0,21 | - | 2,87 |

Diskussion der Ergebnisse aus Tabelle 8:

Aus den erfindungsgemäßen Beispielen 2 und 5 gegenüber der Referenz gemäß Beispiel 1 wird deutlich, dass durch die Behandlung mit Forchlorfenuron auch zu Zeitpunkt St3 die Expression vieler Gene aktiviert wird, die mit der Abwehrreaktion von Pflanzen zusammenhängen. Dies gilt sowohl in nicht inokulierten als auch in Pst-inokulierten Tomatenpflanzen.

Aus Tabelle 8 geht hervor, dass mehrere funktionelle Gruppen von DEGs, die mit Abwehrreaktionen auf biotische Stimuli, insbesondere auf Infektionen mit Pilzen und Bakterien, zusammenhängen durch Forchlorfenuron auch 24 Stunden nach der Inokulation mit Pst hochreguliert sind. Die Aktivierung der Expression dieser Gene ist sogar stärker in den nicht beimpften als in den mit Pst beimpften Pflanzen.

Tabelle 9: Prozentualer Anteil der Gen Ontologie Terme für biologische Prozesse, molekulare Funktionen und zelluläre Komponenten, die signifikant angereichert sind (FDR ≤ 0,05) unter den DEGs, die in behandelten gegenüber unbehandelten Blättern von nicht inokulierten (A) oder Pst-inokulierten (B) Tomatenpflanzen zum Zeitpunkt St4 hochreguliert sind (FC ≥ |2| und FDR < 0,05).

| | Formulierung | Beispiel 1 (Referenz) | Beispiel 2 | Beispiel 5 |
|---|---|---|---|---|
| | Forchlorfenuron (1 % in Ethanol) | 0 | 60 µL $L^{-1}$ | 60 µL $L^{-1}$ |
| | Behandlung | unbehandelt | Nicht inokulierte Kontrolle | Pst-inokuliert |
| Gen Ontologie Term Anteile [%] | Abwehrreaktion auf Pilze | 2,06 | 12,3 | - |
| | Abwehrreaktion auf Bakterien | 1,53 | 6,31 | - |
| | Reaktion auf Cytokinin | 0,95 | 4,42 | - |
| | Reaktion auf Chitin | 0,50 | 3,47 | - |
| | Reaktion auf Moleküle pilzlichen Ursprungs | 0,54 | 3,15 | - |
| | Reaktion auf Moleküle bakteriellen Ursprungs | 0,20 | 2,52 | - |
| | Chitin-Abbauprozess | 0,09 | 1,26 | - |
| | Chitinase-Aktivität | 0,09 | 1,26 | - |
| | Abwehrreaktion auf Pilze | 2,12 | - | 12,5 |
| | Abwehrreaktion auf ein Bakterium | 1,89 | - | 7,64 |
| | Reaktion auf Moleküle pilzlichen Ursprungs | 0,55 | - | 5,56 |
| | Cytokinin-aktivierter Signalweg | 0,10 | - | 3,47 |

Diskussion der Ergebnisse aus Tabelle 9:

Aus den erfindungsgemäßen Beispielen 2 und 5 gegenüber der Referenz Beispiel 1 geht hervor, dass durch Forchlorfenuron-Behandlung eine Vielzahl von biologischen Prozessen zum Zeitpunkt St4 nach wie vor aktiviert sind, sowohl in nicht inokulierten als auch in Pst-inokulierten Tomatenpflanzen.

Aus Tabelle 9 geht weiterhin hervor, dass mehrere funktionelle Gruppen von DEGs, die mit Abwehrreaktionen auf biotische Stimuli wie z.B. Pilz- und Bakterieninfektionen zusammenhängen, durch eine Forchlorfenuron-Behandlung hochreguliert sind.

**Beispiele 6-9:** Wirksamkeit von Forchlorfenuron im Hinblick auf die Stimulierung der pflanzlichen Schadorganismusabwehr in Tomatenpflanzen der Sorte Nunhems 6438 gegenüber *Pseudomonas syringae* pv. *tomato* (Pst) im Vergleich zur Wirkung üblicher Pflanzenschutzmittel.

Tabelle 10: Vergleich der Wirksamkeit bei Häufigkeit und Schwere des Schadorganismusbefalls auf Blättern an Tomatenpflanzen Nunhems zwischen unbehandelter Kontrollreferenz, behandelter Kontrollreferenz und erfindungsgemäßer Formulierung.

| | | | Wirksamkeit gegenüber Häufigkeit des Schadorganismusbefalls [%] | | | | Wirksamkeit gegenüber Schwere des Schadorganismusbefalls [%] | | | |
|---|---|---|---|---|---|---|---|---|---|---|
| | | | Auswertezeitpunkt | | | | Auswertezeitpunkt | | | |
| Beispiel | Aktiver Inhaltsstoff (AI) | Appl. | 1 | 2 | 3 | 4 | 1 | 2 | 3 | 4 |
| 6 (Referenz) | Kontrolle (Kein AI) | | 0 | 0 | 0 | 0 | 0 | 0 | 0 | 0 |
| 7 (Referenz) | Poltiglia Disperss | ABCD | 11 | 48 | 31 | 22 | 27 | 71 | 55 | 28 |

(fortgesetzt)

| | | | Wirksamkeit gegenüber Häufigkeit des Schadorganismusbefalls [%] | | | | Wirksamkeit gegenüber Schwere des Schadorganismusbefalls [%] | | | |
|---|---|---|---|---|---|---|---|---|---|---|
| | | | Auswertezeitpunkt | | | | Auswertezeitpunkt | | | |
| Beispiel | Aktiver Inhaltsstoff (AI) | Appl. | 1 | 2 | 3 | 4 | 1 | 2 | 3 | 4 |
| 8 (Referenz) | Bion | ABCD | 5 | 49 | 35 | 22 | 24 | 70 | 58 | 24 |
| 9 | Forchlorfenuron (1 % in Ethanol) | A | 13 | 43 | 35 | 22 | 30 | 73 | 58 | 26 |
| | | B | 0 | 43 | 38 | 23 | 33 | 66 | 64 | 28 |
| | | C | 5 | 44 | 33 | 23 | 2 | 68 | 64 | 28 |
| | | D | 3 | 46 | 38 | 20 | 11 | 75 | 64 | 24 |
| | | AB | 13 | 51 | 36 | 23 | 26 | 73 | 61 | 28 |
| | | AC | 0 | 49 | 33 | 22 | 18 | 74 | 58 | 26 |
| | | AD | 11 | 51 | 35 | 25 | 35 | 73 | 61 | 28 |
| | | BC | 0 | 48 | 33 | 19 | 27 | 75 | 64 | 26 |
| | | BD | 24 | 48 | 32 | 22 | 35 | 70 | 61 | 26 |
| | | CD | 5 | 51 | 37 | 23 | 15 | 74 | 61 | 28 |
| | | ABCD | 8 | 49 | 37 | 22 | 20 | 75 | 58 | 28 |

Diskussion der Ergebnisse aus Tabelle 10:

Wie aus Tabelle 10 ersichtlich, kann die Widerstandskraft der Tomatenpflanzen der Sorte Nunhems 6438, die mit Forchlorfenuron behandelt wurden (Beispiel 9) gegenüber den unbehandelten Kontrollpflanzen (Beispiel 6) im Hinblick auf die Häufigkeit des Schadorganismusbefalls der Blätter deutlich verbessert werden. Dies wird insbesondere bei einem Vergleich der Auswertezeitpunkte 2, 3 und 4 ersichtlich, wobei die Häufigkeitswerte der unbehandelten Kontrolle (Beispiel 6) den Vergleichswert (Null-Wert für Wirksamkeit) bilden.

So kann die Häufigkeit des Schadorganismusbefalls durch die Forchlorfenuron-Behandlung gegenüber der unbehandelten Kontrolle (Beispiel 6) zum Auswertezeitpunkt 2 um 43 % - 51 %, zum Auswertezeitpunkt 3 um 32 % - 38 % und zum Auswertezeitpunkt 4 um 19 % - 25 % gesenkt werden. Die Reduzierung der Häufigkeit des Schadorganismusbefalls durch die Forchlorfenuron-Behandlung ist zum Auswertezeitpunkt 2 und 4 ungefähr genauso hoch wie bei bekannten Pflanzenverteidigungsaktivatoren (Referenzbeispiele 7 und 8), während zum Auswertezeitpunkt 3 sogar eine etwas bessere Wirkung mit Forchlorfenuron gegen den Schadorganismusbefalls erzielt wird.

In Bezug auf die Wirksamkeit im Hinblick auf die Schwere des Schadorganismusbefalls kann eine Reduktion durch Behandlung mit Forchlorfenuron gegenüber den unbehandelten Kontrollpflanzen um 66 % - 75 % zum Auswertezeitpunkt 2, um 58 % - 64 %, zum Auswertezeitpunkt 3 und um 24 % - 28 % zum Auswertezeitpunkt 4 erreicht werden. Gegenüber den Referenzbeispielen 7 und 8 ist der Befall bei Anwendung der Applikationsmethode ABCD zum Auswertezeitpunkt 2 um 4 % - 5 % höher, zum Auswertezeitpunkt 3 um maximal 3 % höher und zum Auswertezeitpunkt 4 um maximal 4 % höher.

Somit kann die Behandlung mit Forchlorfenuron der Schadorganismusbefalls in Häufigkeit und Schwere, im Vergleich zu unbehandelten Pflanzen, deutlich reduziert werden. Die Wirkung von Forchlorfenuron ist dabei ähnlich gut oder sogar leicht besser als bei Verwendung bekannter Pflanzenschutzmittel wie Poltiglia Dispress® (Beispiel 7) oder Bion® (Beispiel 8). Das Applikationsschema des Forchlorfenurons spielt eine untergeordnete Rolle, sodass der Anwender das Behandlungsschema nach seinen Bedürfnissen anpassen kann.

Tabelle 11: Vergleich des Gesamtertrags und der marktfähigen Tomaten Nunhems 6438.

| Beispiel | Aktiver Inhaltsstoff (AI) | Appl. | Gesamtertrag [%] | Ertrag [%] marktfähig | Ertrag [%] nicht marktfähig |
|---|---|---|---|---|---|
| 6 (Referenz) | unbehandelt | - | 100 | 89 | 10 |

(fortgesetzt)

| Beispiel | Aktiver Inhaltsstoff (AI) | Appl. | Gesamtertrag [%] | Ertrag [%] marktfähig | Ertrag [%] nicht marktfähig |
|---|---|---|---|---|---|
| 7 (Referenz) | Poltiglia Disperss | ABCD | 97 | 92 | 8 |
| 8 (Referenz) | Bion | ABCD | 95 | 93 | 7 |
| 9 | Forchlorfenuron (1 % in Ethanol) | A | 113 | 94 | 6 |
| | | B | 112 | 94 | 6 |
| | | C | 114 | 94 | 6 |
| | | D | 117 | 93 | 7 |
| | | AB | 113 | 95 | 5 |
| | | AC | 114 | 94 | 6 |
| | | AD | 114 | 94 | 6 |
| | | BC | 113 | 94 | 6 |
| | | BD | 115 | 94 | 6 |
| | | CD | 111 | 94 | 6 |
| | | ABCD | 114 | 95 | 5 |

Diskussion der Ergebnisse aus Tabelle 11:

Wie aus Tabelle 11 ersichtlich ist der Gesamtertrag an Tomate bei Anwendung von Forchlorfenuron in allen Applikationen höher als bei den unbehandelten Kontrollpflanzen. Auch gegenüber dem Einsatz der Pflanzenschutzmittel Poltiglia Dispress® und Bion® ist die Verwendung von Forchlorfenuron im Hinblick auf den Ertrag vorteilhaft. Als Basis für den Vergleich werden die Ertragswerte der unbehandelten Kontrolle (Beispiel 6) herangezogen, wobei der Gesamtertragswert auf 100 % gesetzt wird. Die Pflanzenschutzmittel der Referenzbeispiele 7 und 8 wurden nach einem praxisüblichen Applikationsschema ABCD versprüht und zeigen gegenüber der unbehandelten Kontrolle (Beispiel 6) einen um 3 % bis 5 % niedrigeren Gesamtertrag. Hingegen zeigt das erfindungsgemäße Beispiel 9 gegenüber der unbehandelten Kontrolle um 12 % bis 17 % höhere Ertragswerte. Gegenüber dem Referenzbeispiel 7 werden Unterschiede von 15 % bis 20 % ermittelt, gegenüber Referenzbeispiel 8 17 % bis 22 %. Somit führt die Applikation von Forchlorfenuron, die zur Stimulierung der Pflanzenabwehr gegen Schadorganismen wie Bakterien und Pilze angewendet wird, zusätzlich zu einer Erhöhung des Gesamtertrags. Weiterhin wird aus den Ergebnissen in Tabelle 11 klar, dass durch die Behandlung mit Forchlorfenuron darüber hinaus der Ertrag an marktfähigen Tomaten erhöht werden kann.

Weiterhin liefert die erfindungsgemäße Behandlung mit Forchlorfenuron unabhängig vom Applikationsschema ein nahezu identisches Ergebnis im Hinblick auf den Gesamtertrag und den Anteil an marktfähigen Tomaten gegenüber allen Referenzenbeispielen.

Tabelle 12: Vergleich der Kalibergrößen der Tomaten Nunhems 6438

| Beispiel | Aktiver Inhaltsstoff (AI) | Applikation | Klein | Medium | Groß |
|---|---|---|---|---|---|
| 6 (Referenz) | unbehandelt | - | 6 | 45 | 49 |
| 7 (Referenz) | Poltiglia Disperss | ABCD | 10 | 44 | 47 |
| 8 (Referenz) | Bion | ABCD | 10 | 44 | 47 |
| 9 | Forchlorfenuron (1 % in Ethanol) | A | 0 | 30 | 70 |
| | | B | 0 | 34 | 66 |
| | | C | 0 | 33 | 67 |
| | | D | 0 | 32 | 69 |
| | | AB | 0 | 32 | 68 |
| | | AC | 0 | 34 | 66 |
| | | AD | 0 | 32 | 69 |

(fortgesetzt)

| Beispiel | Aktiver Inhaltsstoff (AI) | Applikation | Klein | Medium | Groß |
|---|---|---|---|---|---|
| | | BC | 0 | 31 | 70 |
| | | BD | 0 | 37 | 63 |
| | | CD | 0 | 34 | 66 |
| | | ABCD | 0 | 35 | 65 |

Diskussion der Ergebnisse aus Tabelle 12:

Wie aus Tabelle 12 ersichtlich ist, verschieben sich durch die Behandlung der Tomatenpflanzen mit Forchlorfenuron die Kalibergrößen der erhaltenen Tomaten von den Kategorien "klein" und "medium" zu Tomaten mit der Kalibergröße "groß" im Vergleich zu den Referenzbeispielen 6, 7 und 8.

**Beispiele 10-12:** Wirksamkeit von Forchlorfenuron im Hinblick auf die Stimulierung der pflanzlichen Schadorganismusabwehr in Tomatenkulturen der Sorte Heinz 3406 gegen *Pseudomonas syringae* pv. *tomato* (Pst).

Die Wirksamkeit von Forchlorfenuron im Hinblick auf die Stimulierung der Pflanzenverteidigung ohne Ertragsverluste ist auch bei Tomatenpflanzen der Sorte Heinz 3406 erkennbar, wie aus der Zusammenfassung der Ergebnisse in den Tabellen 13, 14 und 15 ersichtlich ist. In den vorliegenden Beispielen wurde neben dem Schadorganismusbefall von Blättern auch der Befall der Früchte untersucht (Tabelle 14).

Tabelle 13: Vergleich der Wirksamkeit bei Häufigkeit und Schwere des Schadorganismusbefalls auf Blättern an Tomaten Heinz 3406.

| | | | Wirksamkeit gegenüber Häufigkeit des Schadorganismusbefalls [%] | | | | | | | | | |
|---|---|---|---|---|---|---|---|---|---|---|---|---|
| | | | Auswertezeitpunkt | | | | | | | | | |
| Beispiel | Aktiver Inhaltsstoff (AI) | Applikation | 1 | 2 | 3 | 4 | 5 | 6 | 7 | 8 | 9 | 10 |
| 10 (Referenz) | Kontrolle (Kein AI) | | 0 | 0 | 0 | 0 | 0 | 0 | 0 | 0 | 0 | 0 |
| 11 (Referenz) | Poltiglia Disperss | ABCD | 39 | 25 | 40 | 42 | 37 | 35 | 41 | 37 | 40 | 38 |
| 12 | Forchlorfenuron (1 % in Ethanol) | A | 29 | 27 | 45 | 44 | 39 | 36 | 42 | 40 | 40 | 34 |
| | | B | 24 | 24 | 30 | 29 | 27 | 25 | 35 | 32 | 33 | 30 |
| | | C | 33 | 25 | 25 | 26 | 19 | 19 | 35 | 31 | 34 | 30 |
| | | D | 16 | 17 | 12 | 10 | 9 | 4 | 19 | 17 | 22 | 20 |
| | | AB | 14 | 15 | 9 | 7 | 9 | 7 | 22 | 20 | 24 | 23 |
| | | AC | 20 | 14 | 24 | 19 | 20 | 10 | 30 | 30 | 33 | 31 |
| | | AD | 37 | 24 | 33 | 35 | 27 | 20 | 34 | 28 | 31 | 30 |
| | | BC | 20 | 17 | 36 | 36 | 33 | 32 | 42 | 38 | 41 | 35 |
| | | BD | 20 | 19 | 43 | 44 | 39 | 38 | 43 | 37 | 37 | 37 |
| | | CD | 37 | 31 | 40 | 42 | 34 | 30 | 40 | 36 | 37 | 34 |
| | | ABCD | 31 | 19 | 36 | 36 | 28 | 25 | 36 | 32 | 34 | 32 |

(fortgesetzt)

| | | | Wirksamkeit gegenüber Schwere des Schadorganismusbefalls [%] | | | | | | | | | |
|---|---|---|---|---|---|---|---|---|---|---|---|---|
| | | | Auswertezeitpunkt | | | | | | | | | |
| Beispiel | Aktiver Inhaltsstoff (AI) | Applikation | 1 | 2 | 3 | 4 | 5 | 6 | 7 | 8 | 9 | 10 |
| 10 (Referenz) | Kontrolle (Kein AI) | | 0 | 0 | 0 | 0 | 0 | 0 | 0 | 0 | 0 | 0 |
| 11 (Referenz) | Poltiglia Disperss | ABCD | 30 | 43 | 68 | 72 | 75 | 80 | 78 | 77 | 77 | 77 |
| 12 | Forchlorfenuron (1 % in Ethanol) | A | 49 | 45 | 66 | 72 | 75 | 80 | 83 | 83 | 85 | 85 |
| | | B | 33 | 30 | 58 | 63 | 75 | 79 | 82 | 80 | 82 | 82 |
| | | C | 36 | 32 | 50 | 58 | 62 | 70 | 81 | 81 | 83 | 83 |
| | | D | 31 | 33 | 52 | 58 | 53 | 63 | 77 | 75 | 77 | 76 |
| | | AB | 26 | 39 | 43 | 49 | 66 | 71 | 81 | 79 | 80 | 80 |
| | | AC | 41 | 31 | 48 | 54 | 67 | 69 | 77 | 77 | 79 | 79 |
| | | AD | 41 | 53 | 70 | 74 | 63 | 70 | 77 | 75 | 76 | 75 |
| | | BC | 34 | 47 | 59 | 64 | 66 | 72 | 83 | 83 | 85 | 84 |
| | | BD | 43 | 55 | 69 | 72 | 75 | 79 | 85 | 84 | 85 | 85 |
| | | CD | 50 | 63 | 75 | 79 | 80 | 82 | 88 | 86 | 87 | 87 |
| | | ABCD | 43 | 54 | 67 | 70 | 71 | 75 | 82 | 82 | 83 | 82 |

Tabelle 14: Vergleich der Wirksamkeit im Hinblick auf die Häufigkeit des Schadorganismusbefalls auf Tomaten der Tomatenpflanzen der Sorte Heinz 3406.

| | | | Wirksamkeit gegenüber Häufigkeit des Schadorganismusbefalls [%] | | | | | |
|---|---|---|---|---|---|---|---|---|
| | | | Auswertezeitpunkt | | | | | |
| Beispiel | Aktiver Inhaltsstoff | Applikation | 1 | 2 | 3 | 4 | 5 | 6 |
| 10 (Referenz) | Kontrolle (Kein AI) | | 0 | 0 | 0 | 0 | 0 | 0 |
| 11 (Referenz) | Poltiglia Disperss | ABCD | 48 | 46 | 44 | 38 | 39 | 35 |
| 12 | Forchlorfenuron (1 % in Ethanol) | A | 39 | 38 | 40 | 35 | 34 | 33 |
| | | B | 65 | 60 | 58 | 51 | 50 | 43 |
| | | C | 52 | 50 | 51 | 46 | 47 | 42 |
| | | D | 72 | 68 | 51 | 47 | 46 | 40 |
| | | AB | 48 | 44 | 53 | 46 | 46 | 42 |
| | | AC | 37 | 36 | 44 | 37 | 37 | 33 |
| | | AD | 52 | 50 | 49 | 46 | 45 | 38 |
| | | BC | 59 | 56 | 56 | 50 | 51 | 44 |
| | | BD | 50 | 48 | 49 | 46 | 47 | 39 |
| | | CD | 54 | 50 | 47 | 43 | 46 | 41 |
| | | ABCD | 39 | 36 | 45 | 43 | 41 | 40 |

Tabelle 15: Vergleich des Gesamtertrags und an marktfähigen Tomaten für Heinz 3406.

| Beispiel | Aktiver Inhaltsstoff (AI) | Appl. | Gesamtertrag [%] | Ertrag - marktfähig [%] | Ertrag - nicht marktfähig [%] |
|---|---|---|---|---|---|
| 10 (Referenz) | unbehandelt | - | 100 | 46 | 25 |
| 12 | Forchlorfenuron (1 % in Ethanol) | A | 103 | 70 | 30 |
| | | B | 104 | 67 | 33 |
| | | C | 103 | 65 | 35 |
| | | D | 103 | 59 | 41 |
| | | AB | 105 | 62 | 38 |
| | | AC | 104 | 67 | 33 |
| | | AD | 104 | 66 | 34 |
| | | BC | 104 | 70 | 30 |
| | | BD | 103 | 72 | 28 |
| | | CD | 104 | 68 | 32 |
| | | ABCD | 104 | 67 | 33 |

**Beispiele 13-14:** Wirksamkeit von Forchlorfenuron im Hinblick auf die Stimulierung der pflanzlichen Schadorganismusabwehr in Kartoffelkulturen der Sorte Agata gegen *Ralstonia solanacearum.*

Tabelle 16: Vergleich der Wirksamkeit im Hinblick auf die Häufigkeit und die Schwere des Schadorganismusbefalls mit *Ralstonia solanacearum* auf Blättern der Kartoffel Agata.

| | | | Wirksamkeit bei Häufigkeit Schadorganismusbefalls [%] | | | Wirksamkeit bei Schwere Schadorganismusbefalls [%] | | |
|---|---|---|---|---|---|---|---|---|
| | | | Auswertezeitpunkt | | | Auswertezeitpunkt | | |
| Beispiel | Aktiver Inhaltsstoff (AI) | Appl. | 1 | 2 | 3 | 1 | 2 | 3 |
| 13 (Referenz) | unbehandelt | | 0 | 0 | 0 | 0 | 0 | 0 |
| 14 | Forchlorfenuron (in Ethanol) | A | 16 | 29 | 32 | 30 | 42 | 47 |
| | | B | 22 | 34 | 35 | 39 | 49 | 53 |
| | | C | 27 | 35 | 46 | 49 | 59 | 63 |
| | | D | 5 | 20 | 42 | 13 | 43 | 49 |
| | | AB | 16 | 28 | 35 | 31 | 44 | 50 |
| | | AC | 16 | 25 | 39 | 39 | 52 | 54 |
| | | AD | 7 | 17 | 43 | 13 | 40 | 46 |
| | | ABCD | 65 | 67 | 74 | 74 | 78 | 77 |

Diskussion der Ergebnisse aus Tabelle 16:

Aus den Ergebnissen in Tabelle 16 ist ersichtlich, dass der Schadorganismusbefall von Kartoffelblättern der Sorte Agata durch die Behandlung mit Forchlorfenuron gegenüber unbehandelten Kontrollpflanzen (Beispiel 13) deutlich reduziert ist. Dies wird insbesondere aus den Auswertezeitpunkten 2, 3 und 4 in Beispiel 14 ersichtlich. Die Wirksamkeit im Referenzversuch (Beispiel 13) wird dazu auf den Wert Null gesetzt. So ist die Wirksamkeit von D gegenüber der Referenz zum Zeitpunkt 1 um 7 % bis 65 %, zum Zeitpunkt 2 um 17 % bis 67 % und zum Zeitpunkt 3 um 32 % bis 74 % höher. Insbesondere die Applikation ABCD zeigt eine außerordentliche Wirksamkeit gegen den Schadorganismusbefall.

In Bezug auf die Wirksamkeit gegenüber der Schwere des Schadorganismusbefalls fällt dieser in Beispiel 14 hoch aus. Um 13 % bis 74 %, zum Zeitpunkt 1, um 40 % bis 78 %, zum Zeitpunkt 2, um 46 % bis 77 % zum Zeitpunkt 3.

Somit ist sowohl die Häufigkeit des Schadorganismusbefalls als auch die Schwere des Befalls von Blättern, die mit Forchlorfenuron behandelt wurden, zu allen Auswertezeitpunkten und bei allen Applikationsarten stets geringer als bei unbehandelten Kartoffelpflanzen (Beispiel 13).

Tabelle 17: Vergleich des Gesamtertrags und an marktfähigen Kartoffeln der Sorte Agata.

| Beispiel | Aktiver Inhaltsstoff (AI) | Applikation | Gesamtertrag [%] | Ertrag [%] marktfähig | Ertrag [%] nicht marktfähig |
|---|---|---|---|---|---|
| 13 (Referenz) | unbehandelt | - | 100 | 88 | 12 |
| 14 | Forchlorfenuron (in Ethanol) | A | 106 | 90 | 10 |
| | | B | 107 | 91 | 9 |
| | | C | 110 | 92 | 8 |
| | | D | 107 | 89 | 11 |
| | | AB | 107 | 90 | 10 |
| | | AC | 108 | 91 | 9 |
| | | AD | 108 | 88 | 12 |
| | | ABCD | 116 | 94 | 6 |

Beschreibung und Wertung der Ergebnisse aus Tabelle 17:

Wie aus der Tabelle ersichtlich ist der Gesamtertrag an Kartoffel bei Behandlung mit Forchlorfenuron (Beispiel 14) in nahezu allen Applikationen prozentual höher als bei den unbehandelten Pflanzen der Kontrollgruppe (Beispiel 13). Der Gesamtertrag der Kontrollgruppe werden hierbei auf 100 % gesetzt, während die Gesamterträge der behandelten Pflanzen des Beispiels 14 in Relation zur Kontrollgruppe gesetzt werden. Durch die Behandlung der Kartoffelpflanzen mit Forchlorfenuron (Beispiel 14) kann gegenüber der unbehandelten Kontrollgruppe (Beispiel 13) der Gesamtertrag um 6 % bis 16 % je nach Applikation verbessert werden. Die Applikation von Forchlorfenuron, die zur Stimulierung der Pflanzenabwehr eingesetzt wird, führt also zu einer deutlichen Erhöhung des Gesamtertrags an Kartoffeln.

Des Weiteren wird aus Tabelle 17 ersichtlich, dass durch die Anwendung von Forchlorfenuron auch der Anteil an marktfähigen Tomaten gegenüber den unbehandelten Pflanzen erhöht werden kann.

Tabelle 18: Vergleich der Kalibergrößen der Kartoffel Agata zwischen unbehandelter Kontrollreferenz und erfindungsgemäßer Formulierung.

| Beispiel | Aktiver Inhaltstoff (AI) | Applikation | Klein | Medium | Groß | Extra groß |
|---|---|---|---|---|---|---|
| 13 (Referenz) | unbehandelt | - | 24 | 34 | 31 | 12 |
| 14 | Forchlorfenuron (in Ethanol) | A | 22 | 30 | 35 | 14 |
| | | B | 21 | 33 | 34 | 12 |
| | | C | 20 | 32 | 36 | 12 |
| | | D | 21 | 32 | 42 | 6 |
| | | AB | 20 | 32 | 37 | 11 |
| | | AC | 18 | 34 | 37 | 12 |
| | | AD | 17 | 34 | 40 | 9 |
| | | ABCD | 11 | 37 | 44 | 9 |

Diskussion der Ergebnisse aus Tabelle 18:

Durch die Behandlung der Kartoffelpflanzen mit Forchlorfenuron werden verstärkt Kartoffeln mit der Kalibergröße "groß" erhalten, weniger Kartoffeln der Kalibergrößen "klein" und "medium". Durch die Anwendung von Forchlorfenuron wird also neben dem Ertrag auch an gesunden Kartoffeln zusätzlich ein großer Anteil an Kartoffeln mit der im Markt bevorzugtere Kalibergröße "groß" erhalten.

**Beispiele 15-16:** Wirksamkeit von Forchlorfenuron im Hinblick auf die Stimulierung der pflanzlichen Schador-

ganismusabwehr in Kartoffelkulturen der Sorte Colombo gegen *Ralstonia solanacearum.*

Die Wirksamkeit von Forchlorfenuron im Hinblick auf die Häufigkeit und Schwere der Pflanzenverteidigung ohne Ertragsverluste ist auch bei Kartoffelpflanzen der Sorte Colombo erkennbar, wie aus der Zusammenfassung der Ergebnisse in den Tabellen 19, 20 und 21 ersichtlich ist.

Tabelle 19: Vergleich der Wirksamkeit bei Häufigkeit und Schwere des Schadorganismusbefalls auf Blättern der Kartoffel Colombo.

| | | | Wirksamkeit bei Häufigkeit Schadorganismusbefall [%] | | | Wirksamkeit bei Schwere Schadorganismusbefall [%] | | |
|---|---|---|---|---|---|---|---|---|
| | | | Assessment | | | Assessment | | |
| Beispiel | Aktiver Inhaltsstoff (AI) | Appl. | **1** | **2** | **3** | **1** | **2** | **3** |
| 15 (Referenz) | unbehandelt | | 0 | 0 | 0 | 0 | 0 | 0 |
| 16 | Forchlorfenuron (in Ethanol) | ABCD | 63 | 61 | 64 | 63 | 60 | 68 |

Tabelle 20: Vergleich des Gesamtertrags und an marktfähigen Kartoffeln er Sorte Colombo.

| Beispiel | Aktiver Inhaltsstoff (AI) | Applikation | Gesamtertrag [%] | Ertrag [%] marktfähig | Ertrag [%] nicht marktfähig |
|---|---|---|---|---|---|
| 15 (Referenz) | Control | - | 100 | 87 | 13 |
| 16 | Forchlorfenuron (in Ethanol) | ABCD | 121 | 96 | 4 |

Tabelle 21: Vergleich der Kalibergröße der Kartoffeln der Sorte Colombo.

| Beispiel | Aktiver Inhaltsstoff (AI) | Applikation | Klein | Medium | Groß | Extra groß |
|---|---|---|---|---|---|---|
| 15 (Referenz) | unbehandelt | - | 12 | 35 | 41 | 13 |
| 16 | Forchlorfenuron (in Ethanol) | ABCD | 6 | 41 | 48 | 6 |

**Beispiele 17-20:** Wirksamkeit von Forchlorfenuron im Hinblick auf die Stimulierung der pflanzlichen Schadorganismusabwehr in Tomatenkulturen der Sorte Liguria gegen *Xanthomonas vesicatoria* und gegen *Phytophthora infestans.*

Tabelle 22: Vergleich der Wirksamkeit von Forchlorfenuron im Hinblick auf die Häufigkeit und die Schwere des Schadorganismusbefalls durch *Xanthomonas vesicatoria* auf Tomatenpflanzen der Sorte Liguria.

| | | | Wirksamkeit gegenüber Schwere des Schadorganismusbefalls [%] | | | |
|---|---|---|---|---|---|---|
| | | | Auswertezeitpunkt | | | |
| Beispiel | Aktiver Inhaltsstoff | Applikation | 1 | 2 | 3 | 4 |
| 17 (Referenz) | unbehandelt | | 0 | 0 | 0 | 0 |
| 18 | Forchlorfenuron (in Ethanol) | A | 17 | 22 | 43 | 20 |
| | | AB | 41 | 44 | 49 | 21 |
| | | AC | 38 | 28 | 40 | 19 |
| | | ABCD | 13 | 10 | 22 | 13 |

| | | | Wirksamkeit gegenüber Häufigkeit des Schadorganismusbefalls [%] | | | |
|---|---|---|---|---|---|---|
| | | | Auswertezeitpunkt | | | |
| Beispiel | Aktiver Inhaltsstoff | Applikation | 1 | 2 | 3 | 4 |
| 17 (Referenz) | Unbehandelt | | 0 | 0 | 0 | 0 |
| 18 | Forchlorfenuron (in Ethanol) | A | 4 | 8 | 8 | 21 |
| | | AB | 4 | 6 | 9 | 11 |
| | | AC | 17 | 3 | 3 | 13 |
| | | ABCD | 8 | 0 | 0 | 12 |

Diskussion der Ergebnisse aus Tabelle 22:

Wie aus Beispiel 18 ersichtlich ist, ist die Wirksamkeit der Behandlung der Tomatenpflanzen der Sorte Liguria mit Forchlorfenuron gegenüber den unbehandelten Kontrollpflanzen (Beispiel 17) gegen den Befall des Schadorganismus höher. Hierbei wird die Wirksamkeit im Referenzbeispiel 17 auf den Wert Null (keine Wirksamkeit) gesetzt und die Effektivität der Behandlung mit Forchlorfenuron dazu in Beziehung gesetzt. Gemäß Beispiel 18 ist die Häufigkeit des Schadorganismusbefalls durch die Behandlung zum Auswertezeitpunkt 1 um 4 % - 17 %, zum Auswertezeitpunkt 2 bis zu 8 %, zum Auswertezeitpunkt 3 bis zu 9% und zum Auswertezeitpunkt 4 um 11 % - 21 % reduziert.

Auch in Bezug auf die Schwere des Befalls kann durch die Behandlung mit Forchlorfenuron eine deutliche Reduktion erzielt werden. Um 13 % - 41 % zum Auswertezeitpunkt 1, um 10 % - 44 % zum Auswertezeitpunkt 2, um 22 % - 49 % zum Auswertezeitpunkt 3 und um 13 % - 21 % zum Auswertezeitpunkt 4.

Somit kann mit Forchlorfenuron der Schadorganismusbefall mit *Xanthomonas vesicatoria* in Häufigkeit und Schwere, im Vergleich zu unbehandelten Kontrollpflanzen deutlich reduziert werden.

Tabelle 23: Vergleich der Biomasse der Tomaten Liguria zwischen behandelten Tomatenpflanzen und unbehandelten Kontrollpflanzen.

| Beispiel | Aktiver Inhaltsstoff (AI) | Applikation | Biomasse [%] |
|---|---|---|---|
| 17 (Referenz) | unbehandelt | - | 100 |
| 18 | Forchlorfenuron (in Ethanol) | A | 107 |
| | | AB | 109 |
| | | AC | 103 |
| | | ABCD | 106 |

Diskussion der Ergebnisse aus Tabelle 23

Der Vergleich des erfindungsgemäßen Beispiels 18 und des Vergleichsbeispiels 17 zeigt, dass sich durch die Behandlung mit Forchlorfenuron die Biomasse der Tomaten mit allen getesteten Applikationen gegenüber der Kontrollgruppe erhöhen lässt. Zur Bewertung der Biomasse werden die Werte der Kontrollgruppe für den Gesamtertrag auf 100 % gesetzt und die in Beispiel 18 erhaltenen Gesamterträge relativ dazu angegeben.

Durch die Behandlung mit Forchlorfenuron sind die Erträge gegenüber den unbehandelten Pflanzen um 3 % bis 9 % gesteigert. Somit führt die Behandlung mit Forchlorfenuron zur Aktivierung der Pflanzenverteidigung nicht nur zum Erhalt gesünderer Tomaten, sondern auch zu einer Steigerung der Biomasse der erhältlichen Tomaten.

Tabelle 24: Vergleich der Wirksamkeit im Hinblick auf die Häufigkeit und Schwere des Schadorganismusbefalls durch *Phytophthora infestans* auf Tomatenpflanzen der Sorte Liguria.

| | | | Wirksamkeit gegenüber Schwere des Schadorganismusbefalls [%] | | |
|---|---|---|---|---|---|
| | | | Auswertezeitpunkt | | |
| Beispiel | Aktiver Inhaltsstoff (AI) | Applikation | 1 | 2 | 3 |

(fortgesetzt)

| | | | Wirksamkeit gegenüber Schwere des Schadorganismusbefalls [%] | | |
|---|---|---|---|---|---|
| | | | Auswertezeitpunkt | | |
| 19 (Referenz) | unbehandelt | | 0 | 0 | 0 |
| 20 | Forchlorfenuron (in Ethanol) | A | 28 | 38 | 23 |
| | | AB | 13 | 38 | 48 |
| | | AC | 38 | 33 | 39 |
| | | ABCD | 28 | 33 | 20 |

| | | | Wirksamkeit gegenüber Häufigkeit des Schadorganismusbefalls [%] | | |
|---|---|---|---|---|---|
| | | | Auswertezeitpunkt | | |
| Beispiel | Aktiver Inhaltsstoff (AI) | Applikation | 1 | 2 | 3 |
| 19 (Referenz) | unbehandelt | | 0 | 0 | 0 |
| 20 | Forchlorfenuron (in Ethanol) | A | 15 | 19 | 36 |
| | | AB | 9 | 22 | 48 |
| | | AC | 17 | 12 | 47 |
| | | ABCD | 10 | 9 | 36 |

Beschreibung und Wertung der Ergebnisse aus Tabelle 24:

Aus Beispiel 20 wird ersichtlich, dass durch die Behandlung von Tomatenpflanzen der Sorte Liguria mit Forchlorfenuron gegenüber unbehandelten Kontrollpflanzen (Beispiel 19) der Schadorganismusbefall deutlich reduziert werden kann. Hierbei wird die Wirksamkeit im Referenzbeispiel 17 auf den Wert Null (keine Wirksamkeit) gesetzt und die Effektivität der Behandlung mit Forchlorfenuron dazu in Beziehung gesetzt. So ist die Effektivität der Behandlung mit Forchlorfenuron im Hinblick auf die Häufigkeit des Schadorganismusbefalls gegenüber der unbehandelten Kontrollgruppe zum Auswertezeitpunkt 1 um 13 % - 38 %, zum Auswertezeitpunkt 2 um 33 % - 38 % und zum Auswertezeitpunkt 3 um 23 % - 48 % höher. In Bezug auf auch die Schwere des Befalls durch die Behandlung mit Forchlorfenuron reduziert werden. Um 9 % - 17 % zum Auswertezeitpunkt 1, um 9 % - 22 % zum Auswertezeitpunkt 2 und um 36 % - 48 % zum Auswertezeitpunkt 3 gegenüber Referenzbeispiel 19.

Somit kann mit der Behandlung mit Forchlorfenuron der Schadorganismusbefall von Tomatenpflanzen der Sorte Liguria durch *Phytophthora infestans* in Häufigkeit und Schwere, im Vergleich zu unbehandelten Pflanzen reduziert werden.

Tabelle 25: Vergleich der Biomasse der Tomaten Liguria zwischen behandelten Pflanzen und unbehandelten Kontrollpflanzen.

| Beispiel | Aktiver Inhaltsstoff (AI) | Applikation | Biomasse [%] |
|---|---|---|---|
| 19 (Referenz) | unbehandelt | - | 100 |
| 20 | Forchlorfenuron (in Ethanol) | A | 104 |
| | | AB | 107 |
| | | AC | 105 |
| | | ABCD | 102 |

Diskussion der Ergebnisse aus Tabelle 25:

Wie ein Vergleich der Biomasse der erhaltenen Tomaten zeigt, kann in allen Applikationen eine prozentual

höhere Biomasse durch die Behandlung der Tomatenpflanzen mit Forchlorfenuron gegenüber der Kontrollgruppe erzielt werden. Die ermittelte Biomassewerte für den Gesamtertrag an Tomaten in der Kontrollgruppe (Beispiel 19) werden hierbei auf 100 % gesetzt und die Biomassewerte des erfindungsgemäßen Beispiels 20 in Relation dazu ermittelt.

Das erfindungsgemäße Beispiel zeigt gegenüber der unbehandelten Kontrollgruppe um 4 % bis 7 % höhere Ertragswerte je nach Applikation. Durch die Behandlung von Forchlorfenuron zur Stimulierung der Schadorganismusabwehr in Pflanzen kann also der Pilzbefall unter der Verbesserung der Erträge reduziert werden.

**Beispiele 21-24:** Wirksamkeit von Forchlorfenuron im Hinblick auf die Stimulierung der pflanzlichen Schadorganismusabwehr in Petersilie-Zellkulturen im Vergleich zu bekannten Wirkstoffen.

Tabelle 26: Aktivität von Forchlorfenuron in Petersilien Suspensionszellkultur

| Beispiel | Aktiver Inhaltsstoff (Al) | | RLU |
|---|---|---|---|
| 21 (Referenz) | unbehandelt | | 672,5 ± 11,8 |
| 22 (Referenz) | DMSO | | 827,8 ± 392,2 |
| 23 (Referenz) | Peptid-Elicitor Pep-13 (in DMSO) | 6 ppm | 1261 ± 378,9 |
| 24 | Forchlorfenuron (in DMSO) | 0,02 ppm | 645,8 ± 18,0 |
| | | 0,2 ppm | 654,5 ± 28,4 |
| | | 2 ppm | 603,8 ± 53,9 |
| | | 6 ppm | 657,3 ± 141,6 |
| | | 12 ppm | 1120 ± 38,0 |
| | | 25 ppm | 2431 ± 41,5 |

Diskussion der Ergebnisse aus Tabelle 26

Wie aus der Tabelle ersichtlich steigt bei erhöhter Zugabe von Forchlorfenuron in einer Petersilien-Zellkultur die relative Lichteinheit gegenüber der unbehandelten Kontrolle-Zellkultur (Beispiel 21). Die relative Lichteinheit ist eine Maßeinheit, welche die Intensität des von einer Probe emittierten Lichts darstellt und bei der Fluoreszenzmessung der Probe ermittelt wird. Durch Applikation von Forchlorfenuron (Beispiele 24) entstehen Cumarine welche bei Lichtanregung fluoreszieren. Die Menge an exprimierten Cumarinen bestimmt das Maß der relativen Lichteinheit und somit die Abwehrantwort der Zellkultur gegenüber der Zugabe Wirkstoffs. Ab einer Konzentration von 50 µM nähert sich die relative Lichteinheit des erfindungsgemäßen Beispiels 24 derer des Beispiels 23 an. Ab 100 µM übersteigt der Wert sogar des Beispiels 24 sogar den Elicitor im Vergleichsbeispiel 23, sodass Forchlorfenuron als Elicitor klassifiziert werden kann, der eine allgemeine pflanzliche Abwehr direkt indiziert (elicitäre Wirkung). Beispiel 22 dient der Kontrolle des Lösemittels auf potenzielle Cumarin-Expression.

**Beispiele 25 bis 28:** Wirksamkeit von Forchlorfenuron im Hinblick auf die Stimulierung der pflanzlichen Schadorganismusabwehr in Tomatenpflanzen der Sorte Heinz 1301 gegen *Pseudomonas syringae pv. tomato.*

Tabelle 27: Vergleich der Wirksamkeit bei Häufigkeit und Schwere des Schädlingsbefalls auf Blättern an Tomaten Heinz 1301 zwischen unbehandelte Kontrollpflanzen, behandelten Kontrollpflanzen und erfindungsgemäß behandelten Tomatenpflanzen.

| | | | | Wirksamkeit gegenüber Schwere des Schadorganismusbefalls [%] | | | | | |
|---|---|---|---|---|---|---|---|---|---|
| | | | | Auswertezeitpunkt | | | | | |
| Beispiel | Aktiver Inhaltsstoff (Al) | Appl. | Mange Al (g Al/ha) | 1 | 2 | 3 | 4 | 5 | 6 |
| 25 (Ref.) | unbehandelt | | | 0 | 0 | 0 | 0 | 0 | 0 |
| 26 (Ref.) | Poltiglia Disperss | ABCD | 4 x 500 | 34 | 26 | 7 | 13 | 13 | 7 |
| 27 (Ref.) | Serenade ASO | ABCDEF | 6 x 0,429 | 13 | 7 | 6 | 15 | 15 | 8 |
| | | A | 1 x 1,25 | 37 | 53 | 23 | 19 | 28 | 11 |
| | | A | 1 x 2,5 | 44 | 50 | 24 | 22 | 26 | 9 |

(fortgesetzt)

| | | | | Wirksamkeit gegenüber Schwere des Schadorganismusbefalls [%] | | | | | |
|---|---|---|---|---|---|---|---|---|---|
| | | | | Auswertezeitpunkt | | | | | |
| 28 | Forchlorfenuron (in Ethanol) | A | 1 x 5 | 42 | 49 | 19 | 17 | 21 | 12 |
| | | A | 1 x 10 | 41 | 54 | 24 | 20 | 23 | 12 |
| | | AB | 2 x 2,5 | 40 | 46 | 20 | 20 | 28 | 10 |
| | | AC | 2 x 2,5 | 40 | 52 | 23 | 17 | 27 | 10 |
| | | AC | 2 x 1,25 | 30 | 54 | 25 | 21 | 29 | 11 |
| | | CD | 2 x 1,25 | 37 | 49 | 24 | 18 | 26 | 10 |
| | | ABCD | 4 x 1,25 | 64 | 66 | 34 | 28 | 29 | 21 |

| | | | | Wirksamkeit gegenüber Häufigkeit des Schadorganismusbefalls [%] | | | | | |
|---|---|---|---|---|---|---|---|---|---|
| | | | | Auswertezeitpunkt | | | | | |
| Beispiel | Aktiver Inhaltsstoff (Al) | Appl. | Mange Al (g Al/ha) | 1 | 2 | 3 | 4 | 5 | 6 |
| 25 (Ref.) | unbehandelt | | | 0 | 0 | 0 | 0 | 0 | 0 |
| 26 (Ref.) | Poltiglia Disperss | ABCD | 4 x 500 | 36 | 55 | 19 | 14 | 17 | 20 |
| 27 (Ref.) | Serenade ASO | ABCDEF | 6 x 0,429 | 7 | 19 | 20 | 16 | 11 | 24 |
| 28 | Forchlorfenuron (in Ethanol) | A | 1 x 1,25 | 33 | 73 | 54 | 35 | 41 | 44 |
| | | A | 1 x 2,5 | 39 | 72 | 54 | 37 | 42 | 43 |
| | | A | 1 x 5 | 38 | 67 | 52 | 34 | 38 | 44 |
| | | A | 1 x 10 | 38 | 72 | 54 | 34 | 39 | 44 |
| | | AB | 2 x 2,5 | 35 | 69 | 51 | 36 | 41 | 43 |
| | | AC | 2 x 2,5 | 36 | 72 | 53 | 34 | 41 | 44 |
| | | AC | 2 x 1,25 | 30 | 73 | 55 | 37 | 43 | 44 |
| | | CD | 2 x 1,25 | 34 | 70 | 52 | 35 | 40 | 43 |
| | | ABCD | 4 x 1,25 | 74 | 86 | 54 | 48 | 47 | 49 |

Diskussion der Ergebnisse aus Tabelle 27:

Wie aus Tabelle 27 ersichtlich ist die Wirksamkeit von Forchlorfenuron gegenüber der unbehandelten Kontrolle (Referenzbeispiel 25) im Falle von Schädlingsbefall bei Tomatenblättern der Sorte Heinz 1301 bereits bei einer sehr geringen applizierten Menge von 1,25 g Al/ha deutlich erkennbar. Hierbei wird die Wirksamkeit des Referenzbeispiels 25 auf Null (keine Wirksamkeit) gesetzt. So ist die Häufigkeit des Befalls gegenüber Referenzbeispiel 25 zum Zeitpunkt 1 um 30 % - 64 %, zum Zeitpunkt 2 um 46 % - 66 %, zum Zeitpunkt 3 um 19 % - 34 %, zum Zeitpunkt 4 um 17 % - 28 % und zum Zeitpunkt 5 um 9 % - 21 % reduziert, je nach Aufwandmenge und Applikationsschema. Im Vergleich zu den Referenzbeispielen 26 und 27 zeigt Forchlorfenuron bei nahezu allen Anwendungen eine bessere Wirkung gegen den Schädlingsbefall.

In Bezug auf die Schwere des Befalls kann ebenfalls eine Reduktion durch Anwendung von Forchlorfenuron erzielt werden. Die Reduktion gegenüber Referenzbeispiel 25 zum Zeitpunkt 1 beträgt ca. 30 % - 74 %, zum Zeitpunkt 2 ca. 67% - 86 %, zum Zeitpunkt 3 ca. 51 % - 55 %, zum Zeitpunkt 4 ca. 34 % - 48 % und zum Zeitpunkt 5 ca. 43 % - 49 %, je nach Aufwandmenge und Applikationsschema. Wiederum zeigt sich auch bei Schwere des Befalls ein besseres Ergebnis bei der Verwendung von Forchlorfenuron gegenüber den Referenzbeispielen 26 und 27.

Dieser Versuche zeigt, dass die Bekämpfung von Bakteriosen mit unterschiedlichen Konzentrationen von Forchlorfenuron erzielbar ist und stets eine bessere Wirkung gegenüber den marktbekannten Kontrollsubstanzen Poltiglia Dispress und Serenade ASO hervorruft. Bei der Art der Applikation erscheint das Applikationsschema eine eher untergeordnete Rolle im Hinblick auf die Wirksamkeit der Anwendung zu spielen. Mit dem Applikationsschema ABCD für Forchlorfenuron wird zwar das beste Ergebnis erzielt, wobei aber auch die anderen Applikationsformen gute Ergebnisse gegenüber den marktüblichen Referenzen liefern, sodass der Anwender die für sich Wirtschaftlichste Applikationsweise ohne Bedenken auswählen kann.

Tabelle 28: Vergleich des Gesamtertrags an und der marktfähigen und nicht marktfähigen Tomaten Heinz 1301 zwischen unbehandelter Kontrollreferenz, behandelter Kontrollreferenz und erfindungsgemäß behandelter Tomatenpflanzen.

| Beispiel | Aktiver Inhaltsstoff (AI) | Appl. | Menge AI (g AI/ha) | Gesamtertrag [%] | Ertrag - marktfähig [%] | Ertrag - nicht marktfähig [%] |
|---|---|---|---|---|---|---|
| 25 (Ref.) | unbehandelt | | | 100 | 94 | 6 |
| 26 (Ref.) | Poltiglia Disperss | ABCD | 4 × 500 | 100 | 95 | 5 |
| 27 (Ref.) | Serenade ASO | ABCDEF | 6 × 0,429 | 103 | 95 | 5 |
| 28 | Forchlorfenuron (in Ethanol) | A | 1 × 1,25 | 110 | 95 | 5 |
| | | A | 1 × 2,5 | 110 | 96 | 4 |
| | | A | 1 × 5 | 110 | 95 | 5 |
| | | A | 1 × 10 | 111 | 95 | 5 |
| | | AB | 2 × 2,5 | 111 | 96 | 4 |
| | | AC | 2 × 2,5 | 110 | 96 | 4 |
| | | AC | 2 × 1,25 | 108 | 95 | 5 |
| | | CD | 2 × 1,25 | 112 | 95 | 5 |
| | | ABCD | 4 × 1,25 | 109 | 95 | 5 |

Diskussion der Ergebnisse in Tabelle 28:

Wie aus der Tabelle ersichtlich ist, können unabhängig von der Art der Applikation mit Forchlorfenuron die Erträge an marktfähigen Tomaten gegenüber den Referenzbeispielen verbessert werden.

## Patentansprüche

**1.** Verwendung von Verbindungen der Formel (I)

$$R^1\text{-NH-C(=O)-NH-}R^2$$

Formel (I)

wobei

$R^1$ und $R^2$ unabhängig voneinander für einen 6- bis 10-gliedrigen mono- oder bicyclischen Arylrest oder einen 6- bis 10-gliedrigen mono- oder bicyclischen Heteroarylrest stehen, wobei die Reste unsubstituiert oder mit Alkyl-

und/oder Halogenresten substituiert sein können,
zur Stimulierung der Pflanzenabwehr in Nachtschattengewächsen und Doldenblütler gegen bakterielle Infektionen aus der Gruppe *Pseudomonas spp., Xanthomonas spp., Ralstonia spp. und/oder einer Pilzinfektion mit Phytophthora infestans.*

**2.** Verwendung gemäß Anspruch 1, **dadurch gekennzeichnet, dass** die Verbindungen der Formel (I) ausgewählt sind aus den Verbindungen mit den Resten $R^1$ = Phenyl, 2-Methylphenyl, 3-Methylphenyl, 4-Methylphenyl, 2-Chlorphenyl, 3-Chlorphenyl, 4-Chlorphenyl, 2-Fluorphenyl, 3-Fluorphenyl oder 4-Fluorphenyl und $R^2$ = 2-Chlor-4-pyridyl, 2-Fluor-4-pyridyl, 6-Chlor-4-pyridazinyl, 2-Chlor-4-pyrimdinyl, 6-Chlor-4-pyrimidinyl, 6-Fluor-4-pyridazinyl, 2-Fluor-4-pyrimdinyl, 6-Fluor-4-pyrimidinyl, 2-Chlor-4-1,3,5-Triazinyl oder 2-Fluor-4-1,3,5-Triazinyl.

**3.** Verwendung gemäß Anspruch 1 oder 2, **dadurch gekennzeichnet, dass** die Verbindungen der Formel (I) Forchlorfenuron ist.

**4.** Verwendung gemäß einem der Ansprüche 1 bis 3, **dadurch gekennzeichnet, dass** die Verbindungen der Formel (I) in Nachtschattengewächsen eingesetzt werden, die ausgewählt sind aus der Gruppe der Tomaten-, Kartoffel-, Tabak-, Paprika- und Auberginenkulturen.

**5.** Verwendung gemäß einem der Ansprüche 1 bis 3, **dadurch gekennzeichnet, dass** die Verbindungen der Formel (I) in Doldenblütler eingesetzt werden, die ausgewählt sind aus der Gruppe der Petersilien-, Kümmel-, Anis-, Koriander-, Dill, Liebstöckel, Fenchel- und Selleriekulturen.

**6.** Verwendung gemäß einem der Ansprüche 1 bis 5, **dadurch gekennzeichnet, dass** die Verbindungen der Formel (I) bei Nachtschattengewächsen zur Stimulierung der Pflanzenabwehr gegen bakterielle Infektionen aus der Gruppe *Pseudomonas syringae, Pseudomonas alisalensis, Pseudomonas corrugata, Pseudomonas aeruginosa, Pseudomonas solanacearum, Pseudomonas viridiflava, Xanthomonas campestris* und *Ralstonia solanacearum,* oder gegen eine Pilzinfektion durch *Phytophthora infestans* eingesetzt wird.

**7.** Verwendung gemäß einem der Ansprüche 1 bis 6, **dadurch gekennzeichnet, dass** die Verbindungen der Formel (I) während der vegetativen Phase des Pflanzenwachstums appliziert werden.

**8.** Verwendung gemäß einem der Ansprüche 1 bis 7, **dadurch gekennzeichnet, dass** die Verbindungen der Formel (I) in gelöster Form als Spritzbrühe mit einer Konzentration im Bereich von 0,05 ppm bis 500 ppm appliziert wird oder als Konzentrat mit einer Konzentration im Bereich von über 500 ppm bis 150.000 ppm bereitgestellt wird.

**9.** Verwendung gemäß einem der Ansprüche 1 bis 8, **dadurch gekennzeichnet, dass** die Verbindungen der Formel (I) in einer Gesamtmenge im Bereich von 0,1 g/ha bis 100 g/ha appliziert wird.

**10.** Verwendung gemäß einem der Ansprüche 1 bis 9, **dadurch gekennzeichnet, dass** die Häufigkeit und/oder Schwere des Befalls von Nachtschattengewächsen oder Doldenblütlern mit Krankheitserregern aus der Gruppe *Pseudomonas spp., Xanthomonas spp., Ralstonia spp. und/oder einer Pilzinfektion mit Phytophthora infestans* durch die Applikation einer Verbindung der Formel (I) gegenüber unbehandelten Pflanzen der gleichen Sorte reduziert wird.

**11.** Verfahren zur Stimulierung der Pflanzenabwehr in Nachtschattengewächsen und Doldenblütler gegen bakterielle Infektionen aus der Gruppe *Pseudomonas spp., Xanthomonas spp., Ralstonia spp. und/oder einer Pilzinfektion mit Phytophthora infestans* **dadurch gekennzeichnet, dass** auf das Nachschattengewächs oder den Doldenblütler mindestens eine Verbindung ausgewählt aus den Harnstoffderivaten der Formel (I) appliziert wird,

Formel (I)

wobei
$R^1$ und $R^2$ unabhängig voneinander für einen 6- bis 10-gliedrigen mono- oder bicyclischen Arylrest oder einen 6- bis 10-gliedrigen mono- oder bicyclischen Heteroarylrest stehen, wobei die Reste unsubstituiert oder mit Alkyl- und/oder Halogenresten substituiert sein können.

Europäisches
Patentamt
European
Patent Office
Office européen
des brevets

# EUROPÄISCHER RECHERCHENBERICHT

Nummer der Anmeldung
EP 25 16 1225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Liu Jing: "Chapter 80 - Phenylurea Herbicides"<br>In: "Hayes' Handbook of Pesticide Toxicology",<br>1. Januar 2010 (2010-01-01), Elsevier, Academic Press, XP093302805,<br>ISBN: 978-0-12-374367-1<br>Seiten 1725-1731, DOI: 10.1016/B978-0-12-374367-1.00080-X,<br>Gefunden im Internet:<br>URL:https://www.sciencedirect.com/science/article/abs/pii/B978012374367100080X><br>Titel;<br>* Zusammenfassung *<br>----- | 1-11 | INV.<br>A01N47/30<br>A01N47/36<br>A01P1/00<br>A01P3/00<br>A01P21/00 |
| Y | Anonymous: "Pencycuron (Ref: NTN 19701)", ,<br>3. März 2020 (2020-03-03), XP093302799, PPDB<br>Gefunden im Internet:<br>URL:https://web.archive.org/web/20200813124441/https://sitem.herts.ac.uk/aeru/ppdb/en/Reports/510.htm<br>* das ganze Dokument *<br>-----<br>-/-- | 1-11 | RECHERCHIERTE SACHGEBIETE (IPC)<br>A01N<br>A01P |

Der vorliegende Recherchenbericht wurde für alle Patentansprüche erstellt

1

| Recherchenort | Abschlußdatum der Recherche | Prüfer |
|---|---|---|
| München | 7. August 2025 | Größl, Sylvester |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 25 16 1225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | NAGY KÁROLY ET AL: "Interlaboratory evaluation of the genotoxic properties of pencycuron, a commonly used phenylurea fungicide", SCIENCE OF THE TOTAL ENVIRONMENT, ELSEVIER, AMSTERDAM, NL, [Online] Bd. 647, 5. August 2018 (2018-08-05), Seiten 1052-1057, XP085489960, ISSN: 0048-9697, DOI: 10.1016/J.SCITOTENV.2018.08.067 Titel; * Zusammenfassung * * Kap. "4. Discussion"; Seite 1055 - Seite 1056 * | 1-11 | |
| Y | MOUSAWINEJAD SAFIEH ET AL: "Effects of CPPU on size and quality of tomato (Solanum lycopersicum L.) fruits", INTERNATIONAL JOURNAL OF FARMING AND ALLIED SCIENCES, [Online] Bd. 3, Nr. 8, 31. August 2014 (2014-08-31), Seiten 930-934, XP093302366, ISSN: 2322-4134 Gefunden im Internet: URL:http://ijfas.com/wp-content/uploads/2014/08/930-934.pdf> Titel; * Zusammenfassung * * Kap. "Conclusions"; Seite 933 * | 1-11 | |

-/--

RECHERCHIERTE SACHGEBIETE (IPC)

Der vorliegende Recherchenbericht wurde für alle Patentansprüche erstellt

1

| Recherchenort | Abschlußdatum der Recherche | Prüfer |
|---|---|---|
| München | 7. August 2025 | Größl, Sylvester |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 25 16 1225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
| --- | --- | --- | --- |
| A | PETE UMESH D ET AL: "Hybrid molecules of carvacrol and benzoyl urea/thiourea with potential applications in agriculture and medicine", BIOORGANIC & MEDICINAL CHEMISTRY LETTERS, [Online] Bd. 22, Nr. 17, 1. September 2012 (2012-09-01), Seiten 5550-5554, XP028934595, ISSN: 0960-894X, DOI: 10.1016/J.BMCL.2012.07.017 Titel; * Zusammenfassung * * Seite 5552 - Seite 5553; Tabellen 1-3 * ----- | 1-11 | |
| A | ZHANG LONG ET AL: "Degradation of Phenylurea Herbicides by a Novel Bacterial Consortium Containing Synergistically Catabolic Species and Functionally Complementary Hydrolases", JOURNAL OF AGRICULTURAL AND FOOD CHEMISTRY, [Online] Bd. 66, Nr. 47, 8. November 2018 (2018-11-08), Seiten 12479-12489, XP093302808, US ISSN: 0021-8561, DOI: 10.1021/acs.jafc.8b03703 Gefunden im Internet: URL:https://pubs.acs.org/doi/pdf/10.1021/acs.jafc.8b03703> Titel; * Zusammenfassung * * Kap. "Discussion"; Seite 12485 - Seite 12487 * ----- | 1-11 | |
| | -/-- | | RECHERCHIERTE SACHGEBIETE (IPC) |

1

Der vorliegende Recherchenbericht wurde für alle Patentansprüche erstellt

| Recherchenort | Abschlußdatum der Recherche | Prüfer |
| --- | --- | --- |
| München | 7. August 2025 | Größl, Sylvester |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

# EUROPÄISCHER RECHERCHENBERICHT

Nummer der Anmeldung
EP 25 16 1225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CULLINGTON J E ET AL: "RAPID BIODEGRADATION OF DIURON AND OTHER PHENYLUREA HERBICIDES BY A SOIL BACTERIUM", SOIL BIOLOGY AND BIOCHEMISTRY, PERGAMON, OXFORD, GB, [Online] Bd. 31, Nr. 5, 1. Mai 1999 (1999-05-01), Seiten 677-686, XP001057910, ISSN: 0038-0717, DOI: 10.1016/S0038-0717(98)00156-4 Titel; * Zusammenfassung * * Kap. "3. Discussion"; Seite 683 - Seite 685 * ----- | 1-11 | |

RECHERCHIERTE SACHGEBIETE (IPC)

Der vorliegende Recherchenbericht wurde für alle Patentansprüche erstellt

1

| Recherchenort | Abschlußdatum der Recherche | Prüfer |
|---|---|---|
| München | 7. August 2025 | Größl, Sylvester |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **GIRON et al.** *Functional Ecology*, 2013, vol. 27, 599
- **MOSKOVA et al.** *C. R. Acad. Bulg. Sci.*, 2020, vol. 73 (11), 1538-1544
- **GROßKINSKY et al.** *Plant Phys.*, 2011, vol. 157, 815
- **MCKINNEY H.H.** *Journal of Agricultural Research*, 1923, vol. 26, 195
- **VON GAMBINO et al.** *Phytochemical analysis*, 2008, vol. 19 (6), 520-525
- **ROBINSON et al.** *Bioinformatics*, 2010, vol. 26, 139
- **LIAN, Q. et al.** *Int. J. Mol. Sci.*, 2022, vol. 23, 1267